(19) Europäisches Patentamt
European Patent Office
Office européen des brevets

(11) EP 4 697 543 A1

(12) **EUROPEAN PATENT APPLICATION**

(43) Date of publication:
**18.02.2026 Bulletin 2026/08**

(21) Application number: **25195994.6**

(22) Date of filing: **14.08.2025**

(51) International Patent Classification (IPC):
***H02J 3/32*** *(2026.01)* ***H02J 3/38*** *(2026.01)*
***H02J 7/35*** *(2006.01)* ***H02M 1/36*** *(2007.01)*
***H02M 7/48*** *(2007.01)*

(52) Cooperative Patent Classification (CPC):
**H02J 3/381; H02J 3/32; H02J 7/35; H02M 1/007; H02M 1/36; H02M 3/155; H02M 7/48;**
H02J 2101/24; Y02E 10/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.08.2024 CN 202411125479**

(71) Applicant: **Huawei Digital Power Technologies Co., Ltd.**
**Shenzhen, Guangdong 518043 (CN)**

(72) Inventors:
- **SONG, Zhengang**
  **Shenzhen, Guangdong 518043 (CN)**
- **WANG, Kun**
  **Shenzhen, Guangdong 518043 (CN)**
- **LIU, Yongquan**
  **Shenzhen, Guangdong 518043 (CN)**
- **SU, Bing**
  **Shenzhen, Guangdong 518043 (CN)**

(74) Representative: **Maiwald GmbH**
**Engineering**
**Elisenhof**
**Elisenstrasse 3**
**80335 München (DE)**

# (54) PHOTOVOLTAIC ENERGY STORAGE INVERTER AND CONTROL METHOD THEREFOR

(57) Embodiments of this application relate to the field of energy technologies, and disclose a photovoltaic energy storage inverter and a control method therefor, to resolve a problem of how to determine ground parallel impedance of a photovoltaic energy storage inverter and a photovoltaic array and control the photovoltaic energy storage inverter to be grid-connected when the photovoltaic energy storage inverter performs power-on self-check at night and the photovoltaic array has no output voltage or an output voltage of the photovoltaic array is unstable. Specifically, a controller in the photovoltaic energy storage inverter is configured to: when an output voltage of a photovoltaic array is less than or equal to a voltage threshold, and an energy storage apparatus outputs a voltage to a direct current busbar positive electrode and a direct current busbar negative electrode, control a switching transistor in a boost circuit to be in a turned-on state; and when a ratio of a negative busbar voltage to a positive busbar voltage is greater than or equal to a ratio threshold, control an output of an inverter circuit to establish a connection to a power grid; or when a ratio of a negative busbar voltage to a positive busbar voltage is less than a ratio threshold, control an output of an inverter circuit to disconnect from a power grid.

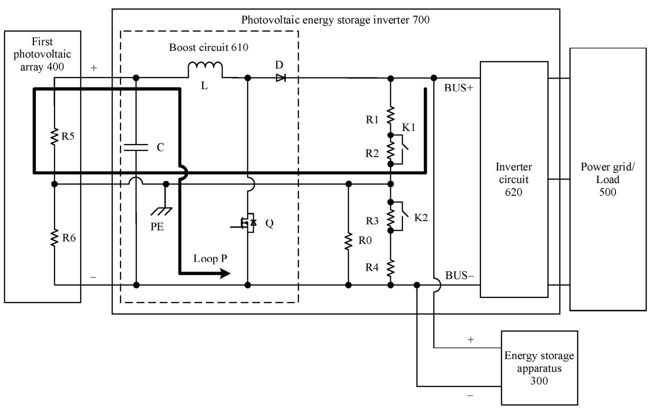

FIG. 3



EP 4 697 543 A1

## Description

### TECHNICAL FIELD

This application relates to the field of energy technologies, and in particular, to a photovoltaic energy storage inverter and a control method therefor.

### BACKGROUND

A photovoltaic energy storage inverter is configured to convert a direct current provided by a photovoltaic array into an alternating current in the daytime, or convert a direct current provided by an energy storage apparatus into an alternating current at night, and transmit the alternating current to a power grid or a load. Therefore, the photovoltaic energy storage inverter can transmit electric energy to the power grid or the load in the daytime or at night. When the photovoltaic energy storage inverter is grid-connected, a requirement for ground insulation impedance of a photovoltaic array in the international electrotechnical commission (international electrotechnical commission, IEC) 62109-2 grid-connection standard needs to be satisfied.

When the photovoltaic energy storage inverter performs power-on self-check in the daytime, ground parallel impedance of the photovoltaic energy storage inverter and the photovoltaic array may be determined based on an output voltage of the photovoltaic array and a busbar voltage between a direct current busbar positive electrode and a direct current busbar negative electrode in the photovoltaic energy storage inverter. The ground parallel impedance may be considered as ground insulation impedance of the photovoltaic array. The photovoltaic energy storage inverter is controlled to be grid-connected based on the ground parallel impedance of the photovoltaic energy storage inverter and the photovoltaic array.

However, when the photovoltaic energy storage inverter performs power-on self-check at night, and the photovoltaic array has no output voltage, or an output voltage of the photovoltaic array is unstable, how to determine ground parallel impedance of the photovoltaic energy storage inverter and the photovoltaic array and control the photovoltaic energy storage inverter to be grid-connected based on the ground parallel impedance of the photovoltaic energy storage inverter and the photovoltaic array becomes a problem to be urgently resolved.

### SUMMARY

Embodiments of this application provide a photovoltaic energy storage inverter and a control method therefor, to resolve a problem of how to determine ground parallel impedance of a photovoltaic energy storage inverter and a photovoltaic array and control the photovoltaic energy storage inverter to be grid-connected when the photovoltaic energy storage inverter performs power-on self-check at night and the photovoltaic array has no output voltage or an output voltage of the photovoltaic array is unstable.

To achieve the foregoing objective, the following technical solutions are used in embodiments of this application.

According to a first aspect of embodiments of this application, a photovoltaic energy storage inverter is provided, including a boost circuit, a first resistor, a second resistor, a direct current busbar positive electrode, a direct current busbar negative electrode, an inverter circuit, and a controller. An input of the boost circuit is configured to connect to a photovoltaic array, an output of the boost circuit is connected to the direct current busbar positive electrode and the direct current busbar negative electrode, the first resistor and the second resistor are connected in series between the direct current busbar positive electrode and the direct current busbar negative electrode, a connection point between the first resistor and the second resistor is configured to connect to a protective earth wire, an input of the inverter circuit is connected to the direct current busbar positive electrode and the direct current busbar negative electrode, and an output of the inverter circuit is configured to connect to a power grid. The direct current busbar positive electrode and the direct current busbar negative electrode are further configured to connect to a positive electrode and a negative electrode of an energy storage apparatus. The controller is configured to: when an output voltage of the photovoltaic array is less than or equal to a voltage threshold, and the energy storage apparatus outputs a voltage to the direct current busbar positive electrode and the direct current busbar negative electrode, control a switching transistor in the boost circuit to be in a turned-on state. The controller is further configured to obtain a busbar voltage and a negative busbar voltage, where the busbar voltage is an absolute value of a voltage difference between the direct current busbar positive electrode and the direct current busbar negative electrode, and the negative busbar voltage is an absolute value of a voltage difference between the protective earth wire and the direct current busbar negative electrode. The controller is further configured to: when a ratio of the negative busbar voltage to a positive busbar voltage is greater than or equal to a ratio threshold, control the output of the inverter circuit to establish a connection to the power grid, where the positive busbar voltage is a difference between the busbar voltage and the negative busbar voltage. The controller is further configured to: when a ratio of the negative busbar voltage to the positive busbar voltage is less than a ratio threshold, control the output of the inverter circuit

to disconnect from the power grid.

Based on this solution, compared with the conventional technology in which the photovoltaic energy storage inverter needs to obtain three voltages such as the busbar voltage when ground parallel impedance of the photovoltaic energy storage inverter and the photovoltaic array is detected during power-on self-check at night, in this solution, the controller obtains the busbar voltage and the negative busbar voltage. Because a resistance value of the first resistor is fixed, the ratio of the negative busbar voltage to the positive busbar voltage may be equivalent to the ground parallel impedance of the photovoltaic energy storage inverter and the photovoltaic array. The controller controls the photovoltaic energy storage inverter to be grid-connected based on the ratio of the negative busbar voltage to the positive busbar voltage. This is equivalent to that the controller controls the photovoltaic energy storage inverter to be grid-connected based on the ground parallel impedance of the photovoltaic energy storage inverter and the photovoltaic array. An inevitable error exists in a process of detecting each voltage. In this application, fewer voltages need to be detected, so that accuracy of detecting the ground parallel impedance of the photovoltaic energy storage inverter and the photovoltaic array can be improved. In addition, compared with the conventional technology in which when ground parallel impedance of the photovoltaic energy storage inverter and the photovoltaic array is detected during power-on self-check at night, because the photovoltaic array has no light illumination, the photovoltaic array has no output voltage, and when a relay is turned on, a port capacitor corresponding to the photovoltaic array in the photovoltaic energy storage inverter is charged, and a capacitance value of the port capacitor is relatively large, and consequently a time constant of a charging loop corresponding to the port capacitor is relatively large, in this solution, when the controller controls the switching transistor in the boost circuit to be in the turned-on state, a capacitance between the protective earth wire and a positive direct current busbar and a negative direct current busbar is smaller, and a time constant is smaller, so that the busbar voltage and the negative busbar voltage can be stable more quickly, the controller can use less time to determine the ratio of the negative busbar voltage to the positive busbar voltage and use less time to determine the ground parallel impedance of the photovoltaic energy storage inverter and the photovoltaic array, and detection time is shorter. Therefore, when the controller controls the photovoltaic energy storage inverter to be grid-connected based on the ratio of the negative busbar voltage to the positive busbar voltage, safety of the photovoltaic energy storage inverter can be improved, a grid-connection speed or a power-on speed of the photovoltaic energy storage inverter can be improved, and the photovoltaic energy storage inverter can be prevented from being damaged or being grid-connected with relatively low efficiency.

With reference to the first aspect, in a possible implementation, the controller is specifically configured to: when turn-on time of the switching transistor in the boost circuit is greater than or equal to a time threshold, obtain the busbar voltage and the negative busbar voltage.

Based on this solution, the controller obtains the busbar voltage and the negative busbar voltage when the turn-on time of the switching transistor in the boost circuit is greater than or equal to the time threshold, so that the controller can obtain a more stable busbar voltage and a more stable negative busbar voltage, and the controller can more accurately determine the ratio of the negative busbar voltage to the positive busbar voltage. This is equivalent to more accurately determining ground parallel impedance of the photovoltaic energy storage inverter and the photovoltaic array, and more safely controlling the photovoltaic energy storage inverter to be grid-connected.

With reference to the first aspect, in a possible implementation, the controller is specifically configured to: when a voltage fluctuation between the direct current busbar positive electrode and the direct current busbar negative electrode is less than or equal to a busbar voltage fluctuation threshold, obtain the busbar voltage; and when a voltage fluctuation between the protective earth wire and the direct current busbar negative electrode is less than or equal to a negative busbar voltage fluctuation threshold, obtain the negative busbar voltage.

Based on this solution, the controller obtains the busbar voltage when the voltage fluctuation between the direct current busbar positive electrode and the direct current busbar negative electrode is less than or equal to the busbar voltage fluctuation threshold, and obtains the negative busbar voltage when the voltage fluctuation between the protective earth wire and the direct current busbar negative electrode is less than or equal to the negative busbar voltage fluctuation threshold, so that the controller can obtain a more stable busbar voltage and a more stable negative busbar voltage, and the controller can more accurately determine the ratio of the negative busbar voltage to the positive busbar voltage. This is equivalent to more accurately determining ground parallel impedance of the photovoltaic energy storage inverter and the photovoltaic array, and more safely controlling the photovoltaic energy storage inverter to be grid-connected.

With reference to the first aspect, in a possible implementation, the photovoltaic energy storage inverter further includes a third resistor and a first switch that are connected in parallel and disposed between the first resistor and the protective earth wire. The controller is further configured to: when controlling the switching transistor in the boost circuit to be in the turned-on state, control the first switch to be in a turned-on state.

Optionally, a type of the first switch includes a relay, an insulated gate bipolar transistor, or a metal-oxide-semiconductor field-effect transistor. A specific type of the first switch is not limited in embodiments of this application.

Based on this solution, the third resistor and the first switch that are connected in parallel are disposed between the first resistor and the protective earth wire. When the photovoltaic energy storage inverter runs in a grid-connected manner, the controller controls the first switch to be in the turned-off state, so that a current flowing through the first resistor

is relatively small, thereby reducing a loss of the photovoltaic energy storage inverter and improving efficiency. When ground insulation impedance of a first photovoltaic array is close to Vmax/30 mA, and there is an order-of-magnitude difference between a resistance value of the first resistor and a resistance value of the third resistor (or a resistance value between the positive direct current busbar and the protective earth wire) and the ground insulation impedance of the first photovoltaic array, a detection error is relatively large, and detection precision is relatively low. Therefore, when the photovoltaic energy storage inverter performs power-on self-check at night, and needs to detect the ground parallel impedance of the photovoltaic energy storage inverter and the photovoltaic array, and the controller controls the switching transistor in the boost circuit to be in the turned-on state, the controller controls the first switch to be in the turned-on state. In this case, the third resistor is short-circuited, the resistance value of the first resistor is relatively small, and the resistance value of the first resistor and the ground insulation impedance of the first photovoltaic array are close and do not have an order-of-magnitude difference. Therefore, detection precision when the ground parallel impedance is close to a requirement for the ground insulation impedance corresponding to the photovoltaic energy storage inverter in the IEC 62109-2 grid-connection standard can be ensured.

With reference to the first aspect, in a possible implementation, the photovoltaic energy storage inverter further includes a fourth resistor and a second switch that are connected in parallel and disposed between the second resistor and the protective earth wire. The controller is further configured to: when the output voltage of the photovoltaic array is greater than the voltage threshold, control the second switch to be in a turned-on state, and control the first switch to be in a turned-off state, to obtain a first negative busbar voltage; and after the first negative busbar voltage is obtained, control the first switch to be in a turned-on state, and control the second switch to be in a turned-off state, to obtain a second negative busbar voltage.

Optionally, a type of the second switch includes a relay, an insulated gate bipolar transistor, or a metal-oxide-semiconductor field-effect transistor. A specific type of the second switch is not limited in embodiments of this application.

Based on this solution, the fourth resistor and the second switch that are connected in parallel are disposed between the second resistor and the protective earth wire. The photovoltaic energy storage inverter may use a manner for detecting the ground parallel impedance of the photovoltaic energy storage inverter and the photovoltaic array during power-on self-check in the daytime in the conventional technology, to detect the ground parallel impedance of the photovoltaic energy storage inverter and the photovoltaic array during power-on self-check in the daytime. In this way, the controller can control the photovoltaic energy storage inverter to be grid-connected when the ground parallel impedance of the photovoltaic energy storage inverter and the photovoltaic array satisfies a requirement for insulation impedance corresponding to the photovoltaic energy storage inverter in the IEC 62109-2 grid-connection standard, so that safety of the photovoltaic energy storage inverter can be improved, the photovoltaic energy storage inverter can be prevented from being damaged, and the photovoltaic energy storage inverter can be prevented from being grid-connected with relatively low efficiency.

According to a second aspect of embodiments of this application, a method for controlling a photovoltaic energy storage inverter is provided, applied to the photovoltaic energy storage inverter. The method includes: when an output voltage of a photovoltaic array is less than or equal to a voltage threshold, and an energy storage apparatus outputs a voltage to a direct current busbar positive electrode and a direct current busbar negative electrode, controlling a switching transistor in a boost circuit to be in a turned-on state; obtaining a busbar voltage and a negative busbar voltage, where the busbar voltage is an absolute value of a voltage difference between the direct current busbar positive electrode and the direct current busbar negative electrode, and the negative busbar voltage is an absolute value of a voltage difference between a protective earth wire and the direct current busbar negative electrode; and when a ratio of the negative busbar voltage to a positive busbar voltage is greater than or equal to a ratio threshold, controlling an output of an inverter circuit to establish a connection to a power grid, where the positive busbar voltage is a difference between the busbar voltage and the negative busbar voltage; or when the ratio of the negative busbar voltage to the positive busbar voltage is less than the ratio threshold, controlling the output of the inverter circuit to disconnect from the power grid. An input of the boost circuit is configured to connect to the photovoltaic array, an output of the boost circuit is connected to the direct current busbar positive electrode and the direct current busbar negative electrode, a first resistor and a second resistor are connected in series between the direct current busbar positive electrode and the direct current busbar negative electrode, a connection point between the first resistor and the second resistor is configured to connect to the protective earth wire, an input of the inverter circuit is connected to the direct current busbar positive electrode and the direct current busbar negative electrode, and the direct current busbar positive electrode and the direct current busbar negative electrode are further configured to connect to a positive electrode and a negative electrode of the energy storage apparatus.

With reference to the second aspect, in a possible implementation, obtaining the busbar voltage and the negative busbar voltage includes: when turn-on time of the switching transistor in the boost circuit is greater than or equal to a time threshold, obtaining the busbar voltage and the negative busbar voltage.

With reference to the second aspect, in a possible implementation, obtaining the busbar voltage and the negative busbar voltage includes: when a voltage fluctuation between the direct current busbar positive electrode and the direct current busbar negative electrode is less than or equal to a busbar voltage fluctuation threshold, obtaining the busbar

voltage; and when a voltage fluctuation between the protective earth wire and the direct current busbar negative electrode is less than or equal to a negative busbarvoltage fluctuation threshold, obtaining the negative busbar voltage.

With reference to the second aspect, in a possible implementation, the photovoltaic energy storage inverter further includes a third resistor and a first switch that are connected in parallel and disposed between the first resistor and the protective earth wire, and the method further includes: when controlling the switching transistor in the boost circuit to be in the turned-on state, controlling the first switch to be in a turned-on state.

With reference to the second aspect, in a possible implementation, the photovoltaic energy storage inverter further includes a fourth resistor and a second switch that are connected in parallel and disposed between the second resistor and the protective earth wire, and the method further includes: when the output voltage of the photovoltaic array is greater than the voltage threshold, controlling the second switch to be in a turned-on state, and controlling the first switch to be in a turned-off state, to obtain a first negative busbar voltage; and after the first negative busbar voltage is obtained, controlling the first switch to be in a turned-on state, and controlling the second switch to be in a turned-off state, to obtain a second negative busbar voltage.

According to a third aspect of embodiments of this application, a photovoltaic power generation system is provided. The photovoltaic power generation system includes a photovoltaic energy storage inverter and an energy storage apparatus connected to the photovoltaic energy storage inverter. The photovoltaic energy storage inverter includes a boost circuit, a first resistor, a second resistor, a direct current busbar positive electrode, a direct current busbar negative electrode, an inverter circuit, and a controller. An input of the boost circuit is configured to connect to a photovoltaic array, an output of the boost circuit is connected to the direct current busbar positive electrode and the direct current busbar negative electrode, the first resistor and the second resistor are connected in series between the direct current busbar positive electrode and the direct current busbar negative electrode, a connection point between the first resistor and the second resistor is configured to connect to a protective earth wire, an input of the inverter circuit is connected to the direct current busbar positive electrode and the direct current busbar negative electrode, and an output of the inverter circuit is configured to connect to a power grid. The direct current busbar positive electrode and the direct current busbar negative electrode are further configured to connect to a positive electrode and a negative electrode of the energy storage apparatus. The controller is configured to: when an output voltage of the photovoltaic array is less than or equal to a voltage threshold, and the energy storage apparatus outputs a voltage to the direct current busbar positive electrode and the direct current busbar negative electrode, control a switching transistor in the boost circuit to be in a turned-on state. The controller is further configured to obtain a busbar voltage and a negative busbar voltage, where the busbar voltage is an absolute value of a voltage difference between the direct current busbar positive electrode and the direct current busbar negative electrode, and the negative busbar voltage is an absolute value of a voltage difference between the protective earth wire and the direct current busbar negative electrode. The controller is further configured to: when a ratio of the negative busbar voltage to a positive busbar voltage is greater than or equal to a ratio threshold, control the output of the inverter circuit to establish a connection to the power grid, where the positive busbar voltage is a difference between the busbar voltage and the negative busbar voltage. The controller is further configured to: when a ratio of the negative busbar voltage to the positive busbar voltage is less than a ratio threshold, control the output of the inverter circuit to disconnect from the power grid.

With reference to the third aspect, in a possible implementation, the controller is specifically configured to: when turn-on time of the switching transistor in the boost circuit is greater than or equal to a time threshold, obtain the busbar voltage and the negative busbar voltage.

With reference to the third aspect, in a possible implementation, the controller is specifically configured to: when a voltage fluctuation between the direct current busbar positive electrode and the direct current busbar negative electrode is less than or equal to a busbar voltage fluctuation threshold, obtain the busbar voltage; and when a voltage fluctuation between the protective earth wire and the direct current busbar negative electrode is less than or equal to a negative busbar voltage fluctuation threshold, obtain the negative busbar voltage.

With reference to the third aspect, in a possible implementation, the photovoltaic energy storage inverter further includes a third resistor and a first switch that are connected in parallel and disposed between the first resistor and the protective earth wire. The controller is further configured to: when controlling the switching transistor in the boost circuit to be in the turned-on state, control the first switch to be in a turned-on state.

With reference to the third aspect, in a possible implementation, the photovoltaic energy storage inverter further includes a fourth resistor and a second switch that are connected in parallel and disposed between the second resistor and the protective earth wire. The controller is further configured to: when the output voltage of the photovoltaic array is greater than the voltage threshold, control the second switch to be in a turned-on state, and control the first switch to be in a turned-off state, to obtain a first negative busbar voltage; and after the first negative busbar voltage is obtained, control the first switch to be in a turned-on state, and control the second switch to be in a turned-off state, to obtain a second negative busbar voltage.

For descriptions of the second aspect and the third aspect in this application, refer to the detailed descriptions of the first aspect. In addition, for beneficial effects of the second aspect and the third aspect, refer to beneficial effect analysis

of the first aspect. Details are not described herein again.

## BRIEF DESCRIPTION OF DRAWINGS

FIG. 1 is a diagram of an application scenario of a photovoltaic energy storage inverter according to an embodiment of this application;
FIG. 2 is a diagram of an equivalent circuit of a solar-only inverter;
FIG. 3 is a diagram of an equivalent circuit of a photovoltaic energy storage inverter;
FIG. 4 is a diagram of an equivalent circuit of a photovoltaic energy storage inverter according to an embodiment of this application;
FIG. 5 is a diagram of an equivalent circuit of another photovoltaic energy storage inverter according to an embodiment of this application;
FIG. 6(a) and FIG. 6(b) are a diagram of an equivalent circuit of another photovoltaic energy storage inverter according to an embodiment of this application;
FIG. 7 is a diagram of an equivalent circuit of another photovoltaic energy storage inverter according to an embodiment of this application;
FIG. 8 is a diagram of an equivalent circuit of another photovoltaic energy storage inverter according to an embodiment of this application;
FIG. 9 is a schematic flowchart of an insulation impedance detection method according to an embodiment of this application; and
FIG. 10 is a schematic flowchart of another insulation impedance detection method according to an embodiment of this application.

## DESCRIPTION OF EMBODIMENTS

Making and using of embodiments are discussed in detail below. However, it should be appreciated that many applicable inventive concepts provided in this application may be implemented in a plurality of specific environments. The discussed specific embodiments are merely used to describe specific manners to implement and use this specification and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not turned on), the circuit/component may also be referred to as being configured to perform the task. Circuits/components used in conjunction with the "configured to" phrase include hardware, for example, a circuit for performing an operation.

The following describes technical solutions in embodiments of this application with reference to the accompanying drawings in embodiments of this application. In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, in embodiments of this application, terms such as "first" and "second" do not limit a quantity or a sequence.

In this application, words such as "example" or "for example" are used to represent giving examples, illustrations, or descriptions. Any embodiment or design solution described as "example" or "for example" in this application should not be construed as being more preferred or advantageous than other embodiments or design solutions. Specifically, the words such as "example" or "for example" are used to present related concepts in a specific manner.

Before embodiments of this application are described, technical terms and background technologies in this application are first described.

Photovoltaic (photovoltaic, PV) module: is a device configured to convert solar energy into electric energy.

Photovoltaic array: The photovoltaic array includes at least one photovoltaic module. When the photovoltaic array includes a plurality of photovoltaic modules, the plurality of photovoltaic modules may be connected in series, or may be connected in parallel, or some of the plurality of photovoltaic modules are connected in series, and the other

photovoltaic modules are connected in parallel.

Grid-connection: technically means a physical connection between a power grid and a generator set, a power plant (field or station), or a direct dispatching user. In terms of management, grid-connection means establishment of a dispatching relationship with a power grid dispatch organization.

Protective earth (protective earth, PE) wire: The protective earth wire is a safe conducting wire, may also be referred to as an earth wire for short, and is used to connect a metal housing or another possibly live part of an electrical device to an earth wire, to avoid an electric shock accident.

Analog ground (analog ground, AGND): is used to ground an analog circuit and provide a stable reference point for an analog signal.

Solar-only inverter: The solar-only inverter is configured to connect to a photovoltaic array, receive a direct current provided by the photovoltaic array, convert the direct current into an alternating current, and transmit the alternating current to a power grid or a load. The solar-only inverter is grid-connected in the daytime.

Photovoltaic energy storage inverter: may also be referred to as a photovoltaic storage inverter for short. The photovoltaic energy storage inverter is configured to connect to a photovoltaic array, and is further configured to connect to an energy storage apparatus. When being grid-connected in the daytime, the photovoltaic energy storage inverter is configured to receive a direct current provided by the photovoltaic array, convert the direct current into an alternating current, and transmit the alternating current to a power grid or a load. When being grid-connected at night, the photovoltaic energy storage inverter is configured to receive a direct current provided by the energy storage apparatus, convert the direct current into an alternating current, and transmit the alternating current to a power grid or a load.

Photovoltaic inverters include a solar-only inverter and a photovoltaic energy storage inverter, and the photovoltaic inverters are used in a photovoltaic power generation system. FIG. 1 is a diagram of an application scenario of a photovoltaic energy storage inverter 100 according to an embodiment of this application. The photovoltaic energy storage inverter 100 is used in a photovoltaic power generation system 200. The photovoltaic power generation system 200 further includes an energy storage apparatus 300 connected to the photovoltaic energy storage inverter 100. The photovoltaic energy storage inverter 100 is configured to connect to a first photovoltaic array 400, and the photovoltaic energy storage inverter 100 is further configured to connect to a power grid/load 500.

In the daytime, when the first photovoltaic array 400 provides a direct current for the photovoltaic energy storage inverter 100, the photovoltaic energy storage inverter 100 is configured to convert the direct current into an alternating current and transmit the alternating current to the power grid/load 500. At night, when the energy storage apparatus 300 provides a direct current for the photovoltaic energy storage inverter 100, the photovoltaic energy storage inverter 100 is configured to convert the direct current into an alternating current and transmit the alternating current to the power grid/load 500.

According to the IEC 62109-2 grid-connection standard, ground insulation impedance of a photovoltaic array connected to a photovoltaic inverter needs to be greater than or equal to maximum system voltage Vmax/30 milliamperes (mA). The maximum system voltage is the maximum voltage level that needs to be considered during design and test of the photovoltaic inverter. For example, for a single-phase photovoltaic inverter with a maximum system voltage of 600 V, ground insulation impedance of a photovoltaic array connected to the single-phase photovoltaic inverter needs to be greater than or equal to 20 (600/30) kiloohms (kΩ). For a three-phase photovoltaic inverter with a maximum system voltage of 1000 V, ground insulation impedance of a photovoltaic array connected to the three-phase photovoltaic inverter needs to be greater than or equal to 33.3 (1000/30) kΩ.

A larger quantity of resistors connected in parallel indicates a smaller total resistance value. When the photovoltaic inverter is grid-connected, ground parallel impedance (which may also be referred to as equivalent impedance to ground) of the photovoltaic inverter and the photovoltaic array may be considered as ground insulation impedance of the photovoltaic array. When the ground parallel impedance satisfies a requirement for ground insulation impedance in the IEC 62109-2 grid-connection standard, the ground insulation impedance of the photovoltaic array also satisfies the requirement for ground insulation impedance in the IEC 62109-2 grid-connection standard. Whether the photovoltaic inverter satisfies the grid-connection standard may be determined based on the ground parallel impedance of the photovoltaic inverter and the photovoltaic array.

In the photovoltaic array, a positive electrode and a negative electrode of a photovoltaic module are insulated from a protective earth wire. Impedance between the protective earth wire and the positive electrode and the negative electrode of the photovoltaic module is usually greater than or equal to 40 megohms (MΩ). The impedance between the protective earth wire and the positive electrode and the negative electrode of the photovoltaic module may also be referred to as ground insulation impedance of the photovoltaic module. As a quantity of photovoltaic modules connected in series or in parallel in the photovoltaic array increases, which may also be referred to as an increase in a quantity of cascaded photovoltaic modules, ground insulation impedance of the photovoltaic module is slightly reduced, and consequently, ground insulation impedance of the photovoltaic array is slightly reduced. When the photovoltaic module in the photovoltaic array cracks, water enters into the photovoltaic module due to poor sealing, an insulation cable ages, a connection cable of the photovoltaic module encounters electric leakage due to poor construction quality, or the like, the ground

insulation impedance of the photovoltaic module greatly decreases, and consequently, the ground insulation impedance of the photovoltaic array greatly decreases. When the ground insulation impedance of the photovoltaic array greatly decreases, the ground parallel impedance of the photovoltaic inverter and the photovoltaic array greatly decreases, and a leakage current in the photovoltaic inverter increases. When the leakage current in the photovoltaic inverter increases, a possibility of damage to the photovoltaic inverter increases, and efficiency of the photovoltaic inverter is reduced. Therefore, a controller in the photovoltaic inverter needs to detect the ground parallel impedance of the photovoltaic inverter and the photovoltaic array before the photovoltaic inverter is grid-connected or during power-on self-check, and controls the photovoltaic inverter not to be grid-connected when the ground parallel impedance of the photovoltaic inverter and the photovoltaic array does not satisfy the requirement for ground insulation impedance in the IEC 62109-2 grid-connection standard, thereby improving safety of the photovoltaic inverter, avoiding damage to the photovoltaic inverter, and preventing the photovoltaic inverter from being grid-connected with relatively low efficiency.

FIG. 2 is a diagram of an equivalent circuit of a solar-only inverter 600. The solar-only inverter 600 includes a boost circuit 610, a first resistor R1, a second resistor R2, a third resistor R3, a fourth resistor R4, a first relay K1, a second relay K2, and an inverter circuit 620.

Two input ends of the boost circuit 610 are configured to connect to a positive electrode and a negative electrode of the first photovoltaic array 400. Two output ends of the boost circuit 610 are respectively connected to a direct current busbar positive electrode BUS+ and a direct current busbar negative electrode BUS-. Two input ends of the inverter circuit 620 are respectively connected to the direct current busbar positive electrode BUS+ and the direct current busbar negative electrode BUS-. An output end of the inverter circuit 620 is configured to connect to the power grid/load 500. The direct current busbar negative electrode BUS- may also be used as an analog ground. Ground insulation impedance of the first photovoltaic array 400 is equivalent to a fifth resistor R5 and a sixth resistor R6 that are connected in parallel to the first photovoltaic array 400, and a connection point between the fifth resistor R5 and the sixth resistor R6 is equivalent to a connection to a protective earth wire PE.

The boost circuit 610 includes a capacitor C, an inductor L, a diode D, and a switching transistor Q. For a connection relationship between components in the boost circuit 610, refer to a circuit topology of the boost circuit in FIG. 2 and the conventional technology. Details are not described in this embodiment of this application.

One end of the first resistor R1 is connected to the direct current busbar positive electrode BUS+, the other end of the first resistor R1 is connected to one end of the second resistor R2, the other end of the second resistor R2 is connected to the protective earth wire PE, and the first relay K1 is connected to the second resistor R2 in parallel. One end of the third resistor R3 is connected to the protective earth wire PE, the other end of the third resistor R3 is connected to one end of the fourth resistor R4, the other end of the fourth resistor R4 is connected to the direct current busbar negative electrode BUS-, and the second relay K2 is connected to the third resistor R3 in parallel.

Refer to FIG. 1. A resistor R0 is an equivalent resistor of each remaining circuit in the solar-only inverter 600 other than the boost circuit 610, the first resistor R1, the second resistor R2, the third resistor R3, the fourth resistor R4, the first relay K1, and the second relay K2. One end of the resistor R0 is connected to the protective earth wire PE, and the other end of the resistor R0 is connected to the direct current busbar negative electrode BUS-.

Resistance values of the resistor R0 and the first resistor R1 to the fourth resistor R4 in the solar-only inverter 600 may be determined in advance through detection, experiment, or the like. The first resistor R1 to the fourth resistor R4, the first relay K1, and the second relay K2 are configured to detect ground parallel impedance of the solar-only inverter 600 and the first photovoltaic array 400, or ground insulation impedance of the first photovoltaic array 400.

Specifically, when the first relay K1 is turned off and the second relay K2 is turned on, for the ground insulation impedance of the first photovoltaic array 400, the fifth resistor R5 and the sixth resistor R6 satisfy the following formula:

$$\frac{U_{PVA}-U1}{R5}+\frac{U_{BUS}-U1}{R1+R2}=\frac{U1}{R6//R0//R4}$$

$U_{PVA}$ is an output voltage of the first photovoltaic array 400, a first voltage U1 is a voltage between the protective earth wire PE and the direct current busbar negative electrode BUS- when the first relay K1 is turned off and the second relay K2 is turned on, $U_{BUS}$ is a busbar voltage between the direct current busbar positive electrode BUS+ and the direct current busbar negative electrode BUS-, R0 to R2 and R4 to R6 represent resistance values of resistors, and "//" represents calculation based on a parallel resistor connection formula.

When the first relay K1 is turned on and the second relay K2 is turned off, for the ground insulation impedance of the first photovoltaic array 400, the fifth resistor R5 and the sixth resistor R6 satisfy the following formula:

$$\frac{U_{PVA}-U2}{R5}+\frac{U_{BUS}-U2}{R1}=\frac{U2}{R6//R0//(R3+R4)}$$

A second voltage U2 is a voltage between the protective earth wire PE and the direct current busbar negative electrode BUS- when the first relay K1 is turned on and the second relay K2 is turned off, and R3 represents a resistance value of the third resistor R3.

The foregoing two formulas are simultaneously used, and it can be learned that for the ground insulation impedance of the first photovoltaic array 400, a sum of a reciprocal of the fifth resistor R5 and a reciprocal of the sixth resistor R6 satisfies the following formula:

$$\frac{1}{R5}+\frac{1}{R6}=\frac{U_{BUS}-(U1-U2)}{U1-U2}\times\frac{1}{R1+R2}-\frac{U_{BUS}+(U1-U2)}{U1-U2}\times\frac{1}{R1}-\frac{1}{R0}$$

The ground insulation impedance of the first photovoltaic array 400 can be obtained according to the formula.

The ground parallel impedance of the solar-only inverter 600 and the first photovoltaic array 400 satisfies the following formula:

$$\frac{1}{R100}=\frac{1}{R5}+\frac{1}{R6}+\frac{1}{R0}+\frac{1}{R1+R2}+\frac{1}{R3+R4}$$

R100 is the ground parallel impedance of the solar-only inverter 600 and the first photovoltaic array 400.

It may be understood according to the foregoing two formulas that, a controller in the solar-only inverter 600 first obtains the busbar voltage $U_{BUS}$, the first voltage U1, and the second voltage U2, then performs calculation by using the foregoing two formulas based on the resistance values of the resistor R0 and the first resistor R1 to the fourth resistor R4, the busbar voltage $U_{BUS}$, the first voltage U1, and the second voltage U2, and takes a reciprocal of a calculation result, to determine the ground parallel impedance R100 of the solar-only inverter 600 and the first photovoltaic array 400. When the ground parallel impedance R100 does not satisfy a requirement for ground insulation impedance corresponding to the solar-only inverter 600 in the IEC 62109-2 grid-connection standard, the controller in the solar-only inverter 600 controls the solar-only inverter 600 not to be grid-connected, thereby improving safety of the solar-only inverter 600, avoiding damage to the solar-only inverter 600, and preventing the solar-only inverter 600 from being grid-connected with relatively low efficiency.

However, when the resistance value of the fifth resistor R5 for the ground insulation impedance of the first photovoltaic array 400 is relatively small, the output voltage $U_{PVA}$ of the first photovoltaic array 400 is very close to first voltage U1/second voltage U2. In the foregoing formula, ($U_{PVA}$-U1) and ($U_{PVA}$-U2) are close to 0. However, there is an inevitable detection error in an actual voltage detection process. When the ground parallel impedance R100 is detected in the foregoing manner, a very large error is caused. In addition, in a scenario in which the photovoltaic energy storage inverter performs power-on self-check at night, when the ground parallel impedance of the photovoltaic energy storage inverter and the photovoltaic array is detected at night in the foregoing manner of detecting the ground parallel impedance R100 when the first photovoltaic array 400 has a stable output voltage, detection is inaccurate and detection time is long. When the photovoltaic energy storage inverter is controlled to be grid-connected based on the detected ground parallel impedance of the photovoltaic energy storage inverter and the photovoltaic array, safety of the photovoltaic energy storage inverter is relatively poor, and the photovoltaic energy storage inverter may be damaged or may be grid-connected with relatively low efficiency.

Specifically, FIG. 3 is a diagram of an equivalent circuit of a photovoltaic energy storage inverter 700. The equivalent circuit of the photovoltaic energy storage inverter 700 is the same as the equivalent circuit of the solar-only inverter 600 shown in FIG. 2. Details are not described in this embodiment of this application. A difference between a circuit topology of the photovoltaic energy storage inverter 700 and the circuit topology of the solar-only inverter 600 lies in that a direct current busbar positive electrode BUS+ and a direct current busbar negative electrode BUS- in the photovoltaic energy storage inverter 700 are further configured to connect to a positive electrode and a negative electrode of the energy storage apparatus 300, to obtain, at night, a direct current provided by the energy storage apparatus 300.

When the photovoltaic energy storage inverter 700 performs power-on self-check at night, the first photovoltaic array 400 outputs no voltage or outputs a relatively low voltage. When ground parallel impedance R200 of the photovoltaic energy storage inverter 700 and the first photovoltaic array 400 is detected during power-on self-check at night in the foregoing manner of detecting the ground parallel impedance R100 when the first photovoltaic array 400 has a stable output voltage, the following process is included.

Refer to FIG. 3. When the first relay K1 is turned on and the second relay K2 is turned off, the direct current busbar positive electrode BUS+ and the direct current busbar negative electrode BUS- charge a capacitor C. As shown in a loop P in FIG. 3, a current output by the direct current busbar positive electrode BUS+ sequentially passes through the first resistor R1, the first relay K1, the fifth resistor R5, and the capacitor C to reach the direct current busbar negative electrode BUS-, so as to charge the capacitor C.

However, when the direct current busbar positive electrode BUS+ and the direct current busbar negative electrode BUS- charge the capacitor C, a voltage of the first photovoltaic array 400 is unstable. Consequently, a voltage between the protective earth wire PE and the direct current busbar negative electrode BUS- is unstable, and it takes a relatively long time to restore stability. A charging loop of the capacitor C when the first relay K1 is turned on and the second relay K2 is turned off is used as an example. Because a time constant of the charging loop is (R1+R5)×C, a capacitance value of the capacitor C is relatively large, and the time constant of the charging loop is relatively large. Consequently, it takes a relatively long time to restore stability of the voltage of the first photovoltaic array 400. If the voltage between the protective earth wire PE and the direct current busbar negative electrode BUS-when the voltage of the first photovoltaic array 400 is unstable is used to calculate the ground parallel impedance R200 of the photovoltaic energy storage inverter 700 and the first photovoltaic array 400, the ground parallel impedance R200 cannot be accurately detected. If the ground parallel impedance R200 is calculated by using the voltage between the protective earth wire PE and the direct current busbar negative electrode BUS- after the voltage of the first photovoltaic array 400 becomes stable, it takes a relatively long time to complete impedance detection.

In conclusion, when the first photovoltaic array 400 has no output voltage or outputs a relatively low voltage at night, and the ground parallel impedance R200 of the photovoltaic energy storage inverter 700 and the first photovoltaic array 400 is detected in the foregoing manner of detecting the ground parallel impedance R100 when the first photovoltaic array 400 has a stable output voltage, impedance detection is inaccurate and detection time is long. When the photovoltaic energy storage inverter 700 is controlled to be grid-connected based on the ground parallel impedance R200, safety of the photovoltaic energy storage inverter 700 is relatively poor, and the photovoltaic energy storage inverter 700 may be damaged or may be grid-connected with relatively low efficiency.

To resolve this problem, an embodiment of this application provides a photovoltaic energy storage inverter. When the photovoltaic energy storage inverter performs power-on self-check at night, and detects ground parallel impedance of the photovoltaic energy storage inverter and a photovoltaic array, fewer voltages need to be detected, so that accuracy of detecting the ground parallel impedance of the photovoltaic energy storage inverter and the photovoltaic array can be improved. When the photovoltaic energy storage inverter is controlled to be grid-connected based on the ground parallel impedance of the photovoltaic energy storage inverter and the photovoltaic array, safety of the photovoltaic energy storage inverter can be improved, and the photovoltaic energy storage inverter can be prevented from being damaged or grid-connected with relatively low efficiency. In addition, a loop time constant during detection is small. This can reduce detection time.

FIG. 4 is a diagram of an equivalent circuit of a photovoltaic energy storage inverter 100 according to an embodiment of this application. The photovoltaic energy storage inverter 100 includes a boost circuit 110, a first resistor R1, a second resistor R2, a direct current busbar positive electrode BUS+, a direct current busbar negative electrode BUS-, an inverter circuit 120, and a controller 130.

An input of the boost circuit 110 is configured to connect to a first photovoltaic array 400, an output of the boost circuit 110 is connected to the direct current busbar positive electrode BUS+ and the direct current busbar negative electrode BUS-, the first resistor R1 and the second resistor R2 are connected in series between the direct current busbar positive electrode BUS+ and the direct current busbar negative electrode BUS-, a connection point between the first resistor R1 and the second resistor R2 is configured to connect to a protective earth wire PE, an input of the inverter circuit 120 is connected to the direct current busbar positive electrode BUS+ and the direct current busbar negative electrode BUS-, and an output of the inverter circuit 120 is configured to connect to a power grid/load 500. The direct current busbar positive electrode BUS+ and the direct current busbar negative electrode BUS- are further configured to connect to a positive electrode and a negative electrode of an energy storage apparatus 300. Ground insulation impedance of the first photovoltaic array 400 is equivalent to a fifth resistor R5 and a sixth resistor R6 that are connected in parallel to the first photovoltaic array 400, and a connection point between the fifth resistor R5 and the sixth resistor R6 is equivalent to a connection to a protective earth wire PE.

Refer to FIG. 4. The boost circuit 110 includes a capacitor C, an inductor L, a diode D, and a switching transistor Q. For a connection relationship between components in the boost circuit 110, refer to a circuit topology of the boost circuit in FIG. 4 and the conventional technology. Details are not described in this embodiment of this application.

Optionally, the switching transistor Q includes an insulated gate bipolar transistor (insulated gate bipolar transistor, IGBT) or a metal-oxide-semiconductor field-effect transistor (metal-oxide-semiconductor field-effect transistor, MOSFET). This is not limited in this embodiment of this application. Refer to FIG. 4. An example in which the switching transistor Q includes a metal-oxide-semiconductor field-effect transistor is used for description in this embodiment of this application.

Refer to FIG. 4. A resistor R0 is an equivalent resistor of each remaining circuit in the photovoltaic energy storage inverter 100 other than the boost circuit 110, the first resistor R1, and the second resistor R2. One end of the resistor R0 is connected to the protective earth wire PE, and the other end of the resistor R0 is connected to the direct current busbar negative electrode BUS-. Resistance values of the resistor R0, the first resistor R1, and the second resistor R2 may be determined in advance through detection, experiment, or the like. The resistor R0, the first resistor R1, and the second

resistor R2 are configured to detect ground parallel impedance of the photovoltaic energy storage inverter 100 and the first photovoltaic array 400.

When the photovoltaic energy storage inverter 100 performs power-on self-check at night, an output voltage of the first photovoltaic array 400 is less than or equal to a voltage threshold, and the energy storage apparatus 300 outputs a voltage to the direct current busbar positive electrode BUS+ and the direct current busbar negative electrode BUS-, the controller 130 is configured to control the switching transistor Q in the boost circuit 110 to be in a turned-on state. A specific value of the voltage threshold is not limited in this embodiment of this application. Therefore, it can be avoided that when a voltage or a current of an output direct current of the first photovoltaic array 400 is relatively large, the controller 130 controls the switching transistor Q in the boost circuit 110 to be in the turned-on state, resulting in a short circuit between a positive electrode and a negative electrode of the first photovoltaic array 400 and damage to the switching transistor or another component. This can improve reliability of the photovoltaic energy storage inverter 100.

In this case, as shown in a loop T in FIG. 4, a current output by the direct current busbar positive electrode BUS+ first passes through the first resistor R1, then a part of the current passes through the fifth resistor R5, the inductor L, and the switching transistor Q to reach the direct current busbar negative electrode BUS-, and the other part of the current passes through the sixth resistor R6 to reach the direct current busbar negative electrode BUS-. The fifth resistor R5 and the sixth resistor R6 are equivalently connected in parallel between the protective earth wire PE and the direct current busbar negative electrode BUS-. Refer to FIG. 5. The ground insulation impedance of the first photovoltaic array 400 may be equivalent to a resistor Rm, and a resistance value of Rm satisfies a formula Rm=R5//R6, where Rm, R5, and R6 represent resistance values of resistors.

Still refer to FIG. 5. In this case, first ground parallel impedance of the photovoltaic energy storage inverter 100 and the first photovoltaic array 400 satisfies the following formula:

$$Z1=R1//R1*V_{PE}/(V_{BUS}-V_{PE})$$

Z1 is the first ground parallel impedance of the photovoltaic energy storage inverter 100 and the first photovoltaic array 400, R1 is a resistance value of the first resistor R1, $V_{BUS}$ is a busbar voltage, the busbar voltage $V_{BUS}$ is an absolute value of a voltage difference between the direct current busbar positive electrode BUS+ and the direct current busbar negative electrode BUS-, $V_{PE}$ is a negative busbar voltage, and the negative busbar voltage $V_{PE}$ is an absolute value of a voltage difference between the protective earth wire PE and the direct current busbar negative electrode BUS-.

It may be understood that, the controller 130 obtains the busbar voltage $V_{BUS}$ and the negative busbar voltage $V_{PE}$, and may determine the first ground parallel impedance Z1 based on the busbar voltage $V_{BUS}$ and the negative busbar voltage $V_{PE}$. Based on the first ground parallel impedance Z1, the controller 130 may control the photovoltaic energy storage inverter 100 to be grid-connected, or control the photovoltaic energy storage inverter 100 not to be grid-connected. Because the resistance value of the first resistor R1 is fixed, a ratio of the negative busbar voltage $V_{PE}$ to a positive busbar voltage may be equivalent to the first ground parallel impedance Z1 of the photovoltaic energy storage inverter 100 and the first photovoltaic array 400. Based on the ratio of the negative busbar voltage $V_{PE}$ to the positive busbar voltage, the controller 130 may control the photovoltaic energy storage inverter 100 to be grid-connected, or control the photovoltaic energy storage inverter 100 not to be grid-connected. The positive busbar voltage is a difference between the busbar voltage $V_{BUS}$ and the negative busbar voltage $V_{PE}$. For a specific process in which the controller 130 obtains the busbar voltage $V_{BUS}$ and the negative busbar voltage $V_{PE}$, refer to the conventional technology. This is not limited in this embodiment of this application.

In a possible embodiment, the controller 130 is further configured to: when the ratio of the negative busbar voltage $V_{PE}$ to the positive busbar voltage is greater than or equal to a ratio threshold, control the output of the inverter circuit 120 to establish a connection to the power grid/load 500, to control the photovoltaic energy storage inverter 100 to be grid-connected. The controller 130 is further configured to: when the ratio of the negative busbar voltage $V_{PE}$ to the positive busbar voltage is less than the ratio threshold, control the output of the inverter circuit 120 to disconnect from the power grid/load 500, to control the photovoltaic energy storage inverter 100 not to be grid-connected. A specific value of the ratio threshold is not limited in this embodiment of this application, and the ratio threshold is related to a requirement for insulation impedance corresponding to the photovoltaic energy storage inverter 100 in the IEC 62109-2 grid-connection standard. Therefore, when the controller 130 controls, based on the ratio of the negative busbar voltage $V_{PE}$ to the positive busbar voltage and the ratio threshold, the photovoltaic energy storage inverter 100 to be grid-connected, safety of the photovoltaic energy storage inverter 100 can be improved, damage to the photovoltaic energy storage inverter 100 can be avoided, and the photovoltaic energy storage inverter 100 can be prevented from being grid-connected with relatively low efficiency.

In a possible embodiment, with reference to FIG. 5, because resistance values of the resistor R0, the first resistor R1, and the second resistor R2 are known, the ground insulation impedance of the first photovoltaic array 400 may be determined based on the first ground parallel impedance Z1 of the photovoltaic energy storage inverter 100 and the first photovoltaic array 400, and the resistance values of the resistor R0, the first resistor R1, and the second resistor R2, and

the controller 130 may control, based on the ground insulation impedance of the first photovoltaic array 400, the photovoltaic energy storage inverter 100 to be grid-connected.

It may be understood that, compared with the foregoing case in which the controller in the photovoltaic energy storage inverter 700 needs to obtain the busbar voltage $U_{BUS}$, the first voltage U1, and the second voltage U2 when the ground parallel impedance R200 of the photovoltaic energy storage inverter 700 and the first photovoltaic array 400 is detected during power-on self-check at night in a manner of detecting the ground parallel impedance R100 when the first photovoltaic array 400 has a stable output voltage, in this embodiment of this application, the controller 130 obtains the busbar voltage $V_{BUS}$ and the negative busbar voltage $V_{PE}$, and determines the first ground parallel impedance Z1 of the photovoltaic energy storage inverter 100 and the first photovoltaic array 400 based on the two voltages and the resistance value of the first resistor R1. An unavoidable error exists in a process of detecting each voltage. However, in this application, fewer voltages need to be detected, so that accuracy of detecting the first ground parallel impedance Z1 can be improved. In addition, compared with the foregoing time constant $(R1+R5)\times C$ of the charging loop when the ground parallel impedance R200 is detected, the first relay K1 is turned on, and the second relay K2 is turned off, in this embodiment of this application, when the first ground parallel impedance Z1 of the photovoltaic energy storage inverter 100 and the first photovoltaic array 400 is detected during power-on self-check at night, the controller 130 controls the switching transistor Q in the boost circuit 110 to be in the turned-on state, a capacitance between the protective earth wire PE and the direct current busbar positive electrode BUS+ and the direct current busbar negative electrode BUS- is smaller, and the time constant is smaller, so that the busbar voltage $V_{BUS}$ and the negative busbar voltage $V_{PE}$ can be stable more quickly, the controller 130 can use less time to determine the first ground parallel impedance Z1, and detection time is shorter.

In a possible embodiment, the controller 130 is specifically configured to obtain the busbar voltage $V_{BUS}$ and the negative busbar voltage $V_{PE}$ when turn-on time of the switching transistor Q in the boost circuit 110 is greater than or equal to a time threshold. A specific value of the time threshold is not limited in this embodiment of this application. Therefore, the controller 130 can obtain a more stable busbar voltage $V_{BUS}$ and a more stable negative busbar voltage $V_{PE}$, and the controller 130 can more accurately determine the first ground parallel impedance Z1 of the photovoltaic energy storage inverter 100 and the first photovoltaic array 400, or more accurately determine a ratio of the negative busbar voltage $V_{PE}$ to a positive busbar voltage.

In a possible embodiment, the controller 130 is specifically configured to: when a voltage fluctuation between the direct current busbar positive electrode BUS+ and the direct current busbar negative electrode BUS- is less than or equal to a busbar voltage fluctuation threshold, obtain the busbar voltage $V_{BUS}$, and when a voltage fluctuation between the protective earth wire PE and the direct current busbar negative electrode BUS- is less than or equal to a negative busbar voltage fluctuation threshold, obtain the negative busbar voltage $V_{PE}$. Specific values of the busbar voltage fluctuation threshold and the negative busbar voltage fluctuation threshold are not limited in this embodiment of this application. Therefore, the controller 130 can obtain a more stable busbar voltage $V_{BUS}$ and a more stable negative busbar voltage $V_{PE}$, and the controller 130 can more accurately determine the first ground parallel impedance Z1 of the photovoltaic energy storage inverter 100 and the first photovoltaic array 400, or more accurately determine a ratio of the negative busbar voltage $V_{PE}$ to a positive busbar voltage.

In a possible embodiment, the controller 130 is specifically configured to: when turn-on time of the switching transistor Q in the boost circuit 110 is greater than or equal to a time threshold, and a voltage fluctuation between the direct current busbar positive electrode BUS+ and the direct current busbar negative electrode BUS- is less than or equal to a busbar voltage fluctuation threshold, obtain the busbar voltage $V_{BUS}$, and when a voltage fluctuation between the protective earth wire PE and the direct current busbar negative electrode BUS- is less than or equal to a negative busbar voltage fluctuation threshold, obtain the negative busbar voltage $V_{PE}$. Therefore, the controller 130 can obtain a more stable busbar voltage $V_{BUS}$ and a more stable negative busbar voltage $V_{PE}$, and the controller 130 can more accurately determine the first ground parallel impedance Z1 of the photovoltaic energy storage inverter 100 and the first photovoltaic array 400, or more accurately determine a ratio of the negative busbar voltage $V_{PE}$ to a positive busbar voltage.

In a possible embodiment, the photovoltaic energy storage inverter 100 may include one boost circuit 110, or may include a plurality of boost circuits 110. The plurality of boost circuits 110 are configured to connect to a plurality of photovoltaic arrays. A specific quantity of boost circuits 110 included in the photovoltaic energy storage inverter 100 is not limited in this embodiment of this application. Refer to FIG. 6(a), this embodiment of this application is described by using an example in which the photovoltaic energy storage inverter 100 includes two boost circuits 110, two input ends of one boost circuit 110 are configured to connect to a positive electrode and a negative electrode of a first photovoltaic array 400, two input ends of the other boost circuit 110 are configured to connect to a positive electrode and a negative electrode of a second photovoltaic array 800, and two output ends of the two boost circuits 110 are respectively connected to a direct current busbar positive electrode BUS+ and a direct current busbar negative electrode BUS-. Ground insulation impedance of the second photovoltaic array 800 is equivalent to a seventh resistor R7 and an eighth resistor R8 that are connected in parallel to the second photovoltaic array 800, and a connection point between the seventh resistor R7 and the eighth resistor R8 is equivalent to a connection to a protective earth wire PE.

When the photovoltaic energy storage inverter 100 includes two boost circuits 110, the photovoltaic energy storage inverter 100 performs power-on self-check at night, and the energy storage apparatus 300 outputs a voltage to the direct current busbar positive electrode BUS+ and the direct current busbar negative electrode BUS-, the controller 130 is configured to control switching transistors Q in the two boost circuits 110 to be in a turned-on state. In this case, as shown in a loop J in FIG. 6(a), the fifth resistor R5 and the sixth resistor R6 are equivalently connected in parallel between the protective earth wire PE and the direct current busbar negative electrode BUS-, and the seventh resistor R7 and the eighth resistor R8 are equivalently connected in parallel between the protective earth wire PE and the direct current busbar negative electrode BUS-. Refer to FIG. 6(b). Ground insulation impedance of the two photovoltaic arrays may be equivalent to a resistor Rn, and a resistance value of the resistor Rn satisfies a formula Rn=R5//R6//R7//R8, where R5 to R8 represent resistance values of resistors.

Still refer to FIG. 6(a) and FIG. 6(b). In this case, second ground parallel impedance of the photovoltaic energy storage inverter 100, the first photovoltaic array 400, and the second photovoltaic array 800 satisfies the following formula:

$$Z2=R1//R1*V_{PE1}/(V_{BUS}-V_{PE1})$$

Z2 is the second ground parallel impedance of the photovoltaic energy storage inverter 100, the first photovoltaic array 400, and the second photovoltaic array 800, R1 is the resistance value of the first resistor R1, the busbar voltage $V_{BUS}$ is an absolute value of a voltage difference between the direct current busbar positive electrode BUS+ and the direct current busbar negative electrode BUS- in this case, and the negative busbar voltage $V_{PE1}$ is an absolute value of a voltage difference between the protective earth wire PE and the direct current busbar negative electrode BUS- in this case. It may be understood that, the controller 130 obtains the busbar voltage $V_{BUS}$ and the negative busbar voltage $V_{PE1}$, and may determine, based on the busbar voltage $V_{BUS}$, the negative busbar voltage $V_{PE1}$, and the resistance value of the first resistor R1, the second ground parallel impedance Z2 of the photovoltaic energy storage inverter 100, the first photovoltaic array 400, and the second photovoltaic array 800 in this case. The controller 130 may control, based on the second ground parallel impedance Z2, the photovoltaic energy storage inverter 100 to be grid-connected, or control the photovoltaic energy storage inverter 100 not to be grid-connected. Because the resistance value of the first resistor R1 is fixed, the controller 130 may also control, based on a ratio of the negative busbar voltage $V_{PE}$ to a positive busbar voltage, the photovoltaic energy storage inverter 100 to be grid-connected, or control the photovoltaic energy storage inverter 100 not to be grid-connected, where the positive busbar voltage is a difference between the busbar voltage $V_{BUS}$ and the negative busbar voltage $V_{PE}$.

When the photovoltaic energy storage inverter 100 includes more boost circuits 110, the more boost circuits 110 are respectively connected to a plurality of photovoltaic arrays, and the photovoltaic energy storage inverter 100 performs power-on self-check at night, for a process in which the controller 130 determines ground parallel impedance of the photovoltaic energy storage inverter 100 and the plurality of photovoltaic arrays, refer to the foregoing descriptions. Details are not described in this embodiment of this application.

Compared with the foregoing case in which the controller in the photovoltaic energy storage inverter 700 needs to obtain the busbar voltage $U_{BUS}$, the first voltage U1, and the second voltage U2 when the ground parallel impedance R200 of the photovoltaic energy storage inverter 700 and the first photovoltaic array 400 is detected during power-on self-check at night in a manner of detecting the ground parallel impedance R100 when the first photovoltaic array 400 has a stable output voltage, in the photovoltaic energy storage inverter 100 provided in this embodiment of this application, the controller 130 obtains the busbar voltage $V_{BUS}$ and the negative busbar voltage $V_{PE}$. Because the resistance value of the first resistor R1 is fixed, the ratio of the negative busbar voltage $V_{PE}$ to the positive busbar voltage may be equivalent to the first ground parallel impedance Z1. The controller 130 controls the photovoltaic energy storage inverter 100 to be grid-connected based on the ratio of the negative busbar voltage $V_{PE}$ to the positive busbar voltage. This is equivalent to that the controller 130 controls the photovoltaic energy storage inverter 100 to be grid-connected based on the first ground parallel impedance Z1. An inevitable error exists in a process of detecting each voltage. In this application, fewer voltages need to be detected, so that accuracy of detecting the first ground parallel impedance Z1 can be improved. In addition, compared with the foregoing time constant $(R1+R5)\times C$ of the charging loop when the ground parallel impedance R200 is detected, the first relay K1 is turned on, and the second relay K2 is turned off, in this embodiment of this application, when the first ground parallel impedance Z1 is detected during power-on self-check at night, a capacitance between the protective earth wire PE and the direct current busbar positive electrode BUS+ and the direct current busbar negative electrode BUS- is smaller, and the time constant is smaller, so that the busbar voltage $V_{BUS}$ and the negative busbar voltage $V_{PE}$ can be stable more quickly, the controller 130 can use less time to determine the ratio of the negative busbar voltage $V_{PE}$ to the positive busbar voltage and use less time to determine the first ground parallel impedance Z1 of the photovoltaic energy storage inverter 100 and the first photovoltaic array 400, and detection time is shorter. Therefore, when the controller 130 controls the photovoltaic energy storage inverter 100 to be grid-connected based on the ratio of the negative busbar voltage $V_{PE}$ to the positive busbar voltage, safety of the photovoltaic energy storage inverter 100 can be improved, a grid-connection speed or a power-on speed of the photovoltaic energy storage inverter 100 can be improved, and the

photovoltaic energy storage inverter 100 can be prevented from being damaged or being grid-connected with relatively low efficiency.

In a possible embodiment, in addition to requiring that the ground insulation impedance of the photovoltaic array connected to the photovoltaic inverter is greater than or equal to the maximum system voltage Vmax/30 mA, the IEC 62109-2 grid-connection standard further imposes a requirement on detection precision when the ground insulation impedance of the photovoltaic array is close to Vmax/30 mA. It can be learned from the formula satisfied by the first ground parallel impedance Z1 that when the ground insulation impedance of the first photovoltaic array 400 is close to Vmax/30 mA, the resistance value of the first resistor R1 is relatively large, and there is an order-of-magnitude difference between the resistance value of the first resistor R1 and the ground insulation impedance of the first photovoltaic array 400, a detection error is relatively large when a resistance value of the first ground parallel impedance Z1 is determined according to the foregoing formula. When the resistance value of the first resistor R1 is relatively small, and the photovoltaic energy storage inverter 100 runs in a grid-connected manner, a current flowing through the first resistor R1 is relatively large, causing a relatively high loss and relatively low efficiency of the photovoltaic energy storage inverter 100.

To resolve this problem, as shown in FIG. 7, the photovoltaic energy storage inverter 100 provided in this embodiment of this application further includes a third resistor R3 and a first switch Y1 that are connected in parallel and disposed between the first resistor R1 and the protective earth wire PE.

When the photovoltaic energy storage inverter 100 runs in a grid-connected manner, the controller 130 controls the first switch Y1 to be in a turned-off state, and a sum of resistance values of the first resistor R1 and the third resistor R3 is relatively large, so that a current flowing through the first resistor R1 is relatively small, thereby reducing a loss of the photovoltaic energy storage inverter 100 and improving efficiency.

Refer to FIG. 7. When ground insulation impedance of the first photovoltaic array 400 is close to Vmax/30 mA, and there is an order-of-magnitude difference between a resistance value of the first resistor R1 and a resistance value of the third resistor R3 (or a resistance value between the direct current busbar positive electrode BUS+ and the protective earth wire PE) and the ground insulation impedance of the first photovoltaic array 400, a detection error is relatively large, and detection precision is relatively low. When the photovoltaic energy storage inverter 100 performs power-on self-check at night, and needs to detect the first ground parallel impedance Z1 of the photovoltaic energy storage inverter 100 and the first photovoltaic array 400, and the controller 130 controls the switching transistor Q in the boost circuit 110 to be in the turned-on state, the controller 130 controls the first switch Y1 to be in the turned-on state. In this case, the third resistor R3 is short-circuited, the resistance value of the first resistor R1 is relatively small, and the resistance value of the first resistor R1 and the ground insulation impedance of the first photovoltaic array 400 are close and do not have an order-of-magnitude difference. Therefore, detection precision when the first ground parallel impedance Z1 is close to a requirement for the ground insulation impedance corresponding to the photovoltaic energy storage inverter 100 in the IEC 62109-2 grid-connection standard can be ensured.

In a possible embodiment, specific resistance values of the first resistor R1 and the third resistor R3 may be selected based on a requirement for ground insulation impedance corresponding to the photovoltaic energy storage inverter 100 in the IEC 62109-2 grid-connection standard. Therefore, detection precision when the first ground parallel impedance Z1 is close to a requirement for the ground insulation impedance corresponding to the photovoltaic energy storage inverter 100 in the IEC 62109-2 grid-connection standard can be ensured.

Optionally, a type of the first switch Y1 includes a relay, an insulated gate bipolar transistor, or a metal-oxide-semiconductor field-effect transistor. A specific type of the first switch Y1 is not limited in embodiments of this application. In embodiments of this application, an example in which the first switch Y1 is a relay is used for description.

In the photovoltaic energy storage inverter 100 provided in this embodiment of this application, the third resistor R3 and the first switch Y1 that are connected in parallel are disposed between the first resistor R1 and the protective earth wire PE. When the photovoltaic energy storage inverter 100 runs in a grid-connected manner, the controller 130 controls the first switch Y1 to be in the turned-off state, so that a current flowing through the first resistor R1 is relatively small, thereby reducing a loss of the photovoltaic energy storage inverter 100 and improving efficiency. When ground insulation impedance of the first photovoltaic array 400 is close to Vmax/30 mA, and there is an order-of-magnitude difference between a resistance value of the first resistor R1 and a resistance value of the third resistor R3 (or a resistance value between the direct current busbar positive electrode BUS+ and the protective earth wire PE) and the ground insulation impedance of the first photovoltaic array 400, a detection error is relatively large, and detection precision is relatively low. Therefore, when the photovoltaic energy storage inverter 100 performs power-on self-check at night, and needs to detect the first ground parallel impedance Z1 of the photovoltaic energy storage inverter 100 and the first photovoltaic array 400, and the controller 130 controls the switching transistor Q in the boost circuit 110 to be in the turned-on state, the controller 130 controls the first switch Y1 to be in the turned-on state. In this case, the third resistor R3 is short-circuited, the resistance value of the first resistor R1 is relatively small, and the resistance value of the first resistor R1 and the ground insulation impedance of the first photovoltaic array 400 are close and do not have an order-of-magnitude difference. Therefore, detection precision when the first ground parallel impedance Z1 is close to a requirement for the ground insulation impedance corresponding to the photovoltaic energy storage inverter 100 in the IEC 62109-2 grid-connection

standard can be ensured.

In a possible embodiment, as shown in FIG. 8, the photovoltaic energy storage inverter 100 provided in this embodiment of this application further includes a fourth resistor R4 and a second switch Y2 that are connected in parallel and disposed between the second resistor R2 and the protective earth wire PE.

When the photovoltaic energy storage inverter 100 performs power-on self-check in the daytime, and the output voltage of the first photovoltaic array 400 is greater than the voltage threshold, the controller 130 is further configured to control the second switch Y2 to be in a turned-on state, and control the first switch Y1 to be in a turned-off state, to obtain the busbar voltage $V_{BUS}$ and a first negative busbar voltage $V_{PE2}$ between the protective earth wire PE and the direct current busbar negative electrode BUS-. After obtaining the first negative busbar voltage $V_{PE2}$, the controller 130 is further configured to control the first switch Y1 to be in a turned-on state, and control the second switch Y2 to be in a turned-off state, to obtain a second negative busbar voltage $V_{PE3}$ between the protective earth wire PE and the direct current busbar negative electrode BUS-. The resistance value of the first resistor R1, the resistance value of the second resistor R2, the resistance value of the third resistor R3, the resistance value of the fourth resistor R4, the busbar voltage $V_{BUS}$, the first negative busbar voltage $V_{PE2}$, and the second negative busbar voltage $V_{PE3}$ are used to determine third ground parallel impedance Z3 of the photovoltaic energy storage inverter 100 and the first photovoltaic array 400. Refer to FIG. 2 and FIG. 8. It may be understood that, in this case, an equivalent circuit of the photovoltaic energy storage inverter 100 is the same as the equivalent circuit of the solar-only inverter 600. The photovoltaic energy storage inverter 100 may detect the third ground parallel impedance Z3 of the photovoltaic energy storage inverter 100 and the first photovoltaic array 400 in the daytime in the foregoing manner of detecting the ground parallel impedance R100 when the first photovoltaic array 400 has a stable output voltage. For a specific process, refer to the specific process in which the ground parallel impedance R100 is detected when the first photovoltaic array 400 has a stable output voltage. Details are not described in this embodiment of this application.

Optionally, a type of the second switch Y2 includes a relay, an insulated gate bipolar transistor, or a metal-oxide-semiconductor field-effect transistor. A specific type of the second switch Y2 is not limited in embodiments of this application. In embodiments of this application, an example in which the second switch Y2 is a relay is used for description.

In the photovoltaic energy storage inverter 100 provided in this embodiment of this application, the fourth resistor R4 and the second switch Y2 that are connected in parallel are disposed between the second resistor R2 and the protective earth wire PE. The photovoltaic energy storage inverter 100 may detect the third ground parallel impedance Z3 of the photovoltaic energy storage inverter 100 and the first photovoltaic array 400 in the daytime in the foregoing manner of detecting the ground parallel impedance R100 when the first photovoltaic array 400 has a stable output voltage, so that the controller 130 can control the photovoltaic energy storage inverter 100 to be grid-connected when the third ground parallel impedance Z3 satisfies a requirement for insulation impedance corresponding to the photovoltaic energy storage inverter 100 in the IEC 62109-2 grid-connection standard. In this way, safety of the photovoltaic energy storage inverter 100 can be improved, the photovoltaic energy storage inverter 100 can be prevented from being damaged, and the photovoltaic energy storage inverter 100 can be prevented from being grid-connected with relatively low efficiency.

Based on this, as shown in FIG. 9, an embodiment of this application further provides an insulation impedance detection method, applied to the photovoltaic energy storage inverter 100. The method includes steps S901 to S904.

S901: When an output voltage of the first photovoltaic array 400 is less than or equal to a voltage threshold, and the energy storage apparatus 300 outputs a voltage to the direct current busbar positive electrode BUS+ and the direct current busbar negative electrode BUS-, the controller 130 controls the switching transistor Q in the boost circuit 110 to be in a turned-on state.

S902: The controller 130 obtains a busbar voltage $V_{BUS}$ and a negative busbar voltage $V_{PE}$, where the busbar voltage $V_{BUS}$ is an absolute value of a voltage difference between the direct current busbar positive electrode BUS+ and the direct current busbar negative electrode BUS-, and the negative busbar voltage $V_{PE}$ is an absolute value of a voltage difference between the protective earth wire PE and the direct current busbar negative electrode BUS-.

In a possible embodiment, that the controller 130 obtains the busbar voltage $V_{BUS}$ and the negative busbar voltage $V_{PE}$ includes: When turn-on time of the switching transistor Q in the boost circuit 110 is greater than or equal to a time threshold, the controller 130 obtains the busbar voltage $V_{BUS}$ and the negative busbar voltage $V_{PE}$. A specific value of the time threshold is not limited in this embodiment of this application. Therefore, the controller 130 can obtain a more stable busbar voltage $V_{BUS}$ and a more stable negative busbar voltage $V_{PE}$, and the controller 130 can more accurately determine the first ground parallel impedance Z1 of the photovoltaic energy storage inverter 100 and the first photovoltaic array 400, or more accurately determine a ratio of the negative busbar voltage $V_{PE}$ to a positive busbar voltage.

In a possible embodiment, that the controller 130 obtains the busbar voltage $V_{BUS}$ and the negative busbar voltage $V_{PE}$ includes: When a voltage fluctuation between the direct current busbar positive electrode BUS+ and the direct current busbar negative electrode BUS- is less than or equal to a busbar voltage fluctuation threshold, the controller 130 obtains the busbar voltage $V_{BUS}$, and when a voltage fluctuation between the protective earth wire PE and the direct current busbar negative electrode BUS- is less than or equal to a negative busbar voltage fluctuation threshold, the controller 130 obtains the negative busbar voltage $V_{PE}$. Specific values of the busbar voltage fluctuation threshold and the

negative busbar voltage fluctuation threshold are not limited in this embodiment of this application. Therefore, the controller 130 can obtain a more stable busbar voltage $V_{BUS}$ and a more stable negative busbar voltage $V_{PE}$, and the controller 130 can more accurately determine the first ground parallel impedance Z1 of the photovoltaic energy storage inverter 100 and the first photovoltaic array 400, or more accurately determine a ratio of the negative busbar voltage $V_{PE}$ to a positive busbar voltage.

In a possible embodiment, that the controller 130 obtains the busbar voltage $V_{BUS}$ and the negative busbar voltage $V_{PE}$ includes: When turn-on time of the switching transistor Q in the boost circuit 110 is greater than or equal to a time threshold, and a voltage fluctuation between the direct current busbar positive electrode BUS+ and the direct current busbar negative electrode BUS- is less than or equal to a busbar voltage fluctuation threshold, the controller 130 obtains the busbar voltage $V_{BUS}$, and when a voltage fluctuation between the protective earth wire PE and the direct current busbar negative electrode BUS- is less than or equal to a negative busbar voltage fluctuation threshold, the controller 130 obtains the negative busbar voltage $V_{PE}$. Therefore, the controller 130 can obtain a more stable busbar voltage $V_{BUS}$ and a more stable negative busbar voltage $V_{PE}$, and the controller 130 can more accurately determine the first ground parallel impedance Z1 of the photovoltaic energy storage inverter 100 and the first photovoltaic array 400, or more accurately determine a ratio of the negative busbar voltage $V_{PE}$ to a positive busbar voltage.

S903: When a ratio of the negative busbar voltage $V_{PE}$ to the positive busbar voltage is greater than or equal to a ratio threshold, the controller 130 controls an output of the inverter circuit 120 to establish a connection to the power grid/load 500, where the positive busbar voltage is a difference between the busbar voltage $V_{BUS}$ and the negative busbar voltage $V_{PE}$.

S904: When the ratio of the negative busbar voltage $V_{PE}$ to the positive busbar voltage is less than the ratio threshold, the controller 130 controls the output of the inverter circuit 120 to disconnect from the power grid/load 500.

When performing step S903 and step S904, the controller 130 may select one of the steps for execution based on a relationship between the ratio of the negative busbar voltage $V_{PE}$ to the positive busbar voltage and the ratio threshold.

Compared with the foregoing case in which the controller in the photovoltaic energy storage inverter 700 needs to obtain the busbar voltage $U_{BUS}$, the first voltage U1, and the second voltage U2 when the ground parallel impedance R200 of the photovoltaic energy storage inverter 700 and the first photovoltaic array 400 is detected during power-on self-check at night in a manner of detecting the ground parallel impedance R100 when the first photovoltaic array 400 has a stable output voltage, in the insulation impedance detection method provided in this embodiment of this application, the controller 130 obtains the busbar voltage $V_{BUS}$ and the negative busbar voltage $V_{PE}$. Because a resistance value of the first resistor R1 is fixed, the ratio of the negative busbar voltage $V_{PE}$ to the positive busbar voltage may be equivalent to the first ground parallel impedance Z1. The controller 130 controls the photovoltaic energy storage inverter 100 to be grid-connected based on the ratio of the negative busbar voltage $V_{PE}$ to the positive busbar voltage. This is equivalent to that the controller 130 controls the photovoltaic energy storage inverter 100 to be grid-connected based on the first ground parallel impedance Z1. An inevitable error exists in a process of detecting each voltage. In this application, fewer voltages need to be detected, so that accuracy of detecting the first ground parallel impedance Z1 can be improved. In addition, compared with the foregoing time constant $(R1+R5)\times C$ of the charging loop when the ground parallel impedance R200 is detected, the first relay K1 is turned on, and the second relay K2 is turned off, in this embodiment of this application, when the first ground parallel impedance Z1 is detected during power-on self-check at night, a capacitance between the protective earth wire PE and the direct current busbar positive electrode BUS+ and the direct current busbar negative electrode BUS- is smaller, and the time constant is smaller, so that the busbar voltage $V_{BUS}$ and the negative busbar voltage $V_{PE}$ can be stable more quickly, the controller 130 can use less time to determine the ratio of the negative busbar voltage $V_{PE}$ to the positive busbar voltage and use less time to determine the first ground parallel impedance Z1 of the photovoltaic energy storage inverter 100 and the first photovoltaic array 400, and detection time is shorter. Therefore, when the controller 130 controls the photovoltaic energy storage inverter 100 to be grid-connected based on the ratio of the negative busbar voltage $V_{PE}$ to the positive busbar voltage, safety of the photovoltaic energy storage inverter 100 can be improved, a grid-connection speed or a power-on speed of the photovoltaic energy storage inverter 100 can be improved, and the photovoltaic energy storage inverter 100 can be prevented from being damaged or being grid-connected with relatively low efficiency.

In a possible embodiment, when the photovoltaic energy storage inverter 100 is the photovoltaic energy storage inverter 100 shown in FIG. 7, as shown in FIG. 10, the method further includes step S905. During execution, step S905 and step S901 may be simultaneously performed.

S905: When controlling the switching transistor Q in the boost circuit 110 to be in the turned-on state, the controller 130 controls the first switch Y1 to be in a turned-on state.

According to the insulation impedance detection method provided in this embodiment of this application, when the photovoltaic energy storage inverter 100 runs in a grid-connected manner, the controller 130 controls the first switch Y1 to be in a turned-off state, so that a current flowing through the first resistor R1 is relatively small, thereby reducing a loss of the photovoltaic energy storage inverter 100 and improving efficiency. When ground insulation impedance of the first photovoltaic array 400 is close to Vmax/30 mA, and there is an order-of-magnitude difference between a resistance value

of the first resistor R1 and a resistance value of the third resistor R3 (or a resistance value between the direct current busbar positive electrode BUS+ and the protective earth wire PE) and the ground insulation impedance of the first photovoltaic array 400, a detection error is relatively large, and detection precision is relatively low. Therefore, when the photovoltaic energy storage inverter 100 performs power-on self-check at night, and needs to detect the first ground parallel impedance Z1 of the photovoltaic energy storage inverter 100 and the first photovoltaic array 400, and the controller 130 controls the switching transistor Q in the boost circuit 110 to be in the turned-on state, the controller 130 controls the first switch Y1 to be in the turned-on state. In this case, the third resistor R3 is short-circuited, the resistance value of the first resistor R1 is relatively small, and the resistance value of the first resistor R1 and the ground insulation impedance of the first photovoltaic array 400 are close and do not have an order-of-magnitude difference. Therefore, detection precision when the first ground parallel impedance Z1 is close to a requirement for the ground insulation impedance corresponding to the photovoltaic energy storage inverter 100 in the IEC 62109-2 grid-connection standard can be ensured.

In a possible embodiment, when the photovoltaic energy storage inverter 100 is the photovoltaic energy storage inverter 100 shown in FIG. 8, as shown in FIG. 10, the method further includes steps S906 and S907. When the photovoltaic energy storage inverter 100 performs power-on self-check at night, step S901 to step S905 may be performed. When the photovoltaic energy storage inverter 100 performs power-on self-check in the daytime, steps S906 and S907 may be performed.

S906: When the output voltage of the first photovoltaic array 400 is greater than the voltage threshold, the controller 130 controls the second switch Y2 to be in a turned-on state, and controls the first switch Y1 to be in a turned-off state, to obtain the busbar voltage $V_{BUS}$ and a first negative busbar voltage $V_{PE2}$ between the protective earth wire PE and the direct current busbar negative electrode BUS-.

S907: After obtaining the first negative busbar voltage $V_{PE2}$, the controller 130 controls the first switch Y1 to be in a turned-on state, and controls the second switch Y2 to be in a turned-off state, to obtain a second negative busbar voltage $V_{PE3}$ between the protective earth wire PE and the direct current busbar negative electrode BUS-.

A resistance value of the first resistor R1, a resistance value of the second resistor R2, a resistance value of the third resistor R3, a resistance value of the fourth resistor R4, the busbar voltage $V_{BUS}$, the first negative busbar voltage $V_{PE2}$, and the second negative busbar voltage $V_{PE3}$ are used to determine the third ground parallel impedance Z3 of the photovoltaic energy storage inverter 100 and the first photovoltaic array 400.

According to the insulation impedance detection method provided in this embodiment of this application, the third ground parallel impedance Z3 of the photovoltaic energy storage inverter 100 and the first photovoltaic array 400 is detected in the daytime in the foregoing manner of detecting the ground parallel impedance R100 when the first photovoltaic array 400 has a stable output voltage, so that the controller 130 can control the photovoltaic energy storage inverter 100 to be grid-connected when the third ground parallel impedance Z3 satisfies a requirement for insulation impedance corresponding to the photovoltaic energy storage inverter 100 in the IEC 62109-2 grid-connection standard. In this way, safety of the photovoltaic energy storage inverter 100 can be improved, the photovoltaic energy storage inverter 100 can be prevented from being damaged, and the photovoltaic energy storage inverter 100 can be prevented from being grid-connected with relatively low efficiency.

Based on this, an embodiment of this application further provides a photovoltaic power generation system. A circuit topology of the photovoltaic power generation system is the circuit topology of the photovoltaic power generation system 200 shown in FIG. 1. The photovoltaic power generation system 200 includes a photovoltaic energy storage inverter 100, and further includes an energy storage apparatus 300 connected to the photovoltaic energy storage inverter 100. The photovoltaic energy storage inverter 100 is configured to connect to at least one photovoltaic array. Refer to FIG. 1. An example in which the photovoltaic energy storage inverter 100 is configured to connect to a first photovoltaic array 400 is used for description in embodiments of this application. A diagram of an equivalent circuit of the photovoltaic energy storage inverter 100 is the diagram of the equivalent circuit of the photovoltaic energy storage inverter 100 shown in any one of FIG. 4 to FIG. 8.

The foregoing detailed descriptions of the photovoltaic energy storage inverter 100 and beneficial effect analysis may be correspondingly cited to the control method for the photovoltaic energy storage inverter 100 and the photovoltaic power generation system 200. Details are not described in embodiments of this application.

The foregoing descriptions are merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A photovoltaic energy storage inverter, comprising a boost circuit, a first resistor, a second resistor, a direct current busbar positive electrode, a direct current busbar negative electrode, an inverter circuit, and a controller, wherein

an input of the boost circuit is configured to connect to a photovoltaic array, an output of the boost circuit is connected to the direct current busbar positive electrode and the direct current busbar negative electrode, the first resistor and the second resistor are connected in series between the direct current busbar positive electrode and the direct current busbar negative electrode, a connection point between the first resistor and the second resistor is configured to connect to a protective earth wire, an input of the inverter circuit is connected to the direct current busbar positive electrode and the direct current busbar negative electrode, and an output of the inverter circuit is configured to connect to a power grid;

the direct current busbar positive electrode and the direct current busbar negative electrode are further configured to connect to a positive electrode and a negative electrode of an energy storage apparatus;

the controller is configured to: when an output voltage of the photovoltaic array is less than or equal to a voltage threshold, and the energy storage apparatus outputs a voltage to the direct current busbar positive electrode and the direct current busbar negative electrode, control a switching transistor in the boost circuit to be in a turned-on state;

the controller is further configured to obtain a busbar voltage and a negative busbar voltage, wherein the busbar voltage is an absolute value of a voltage difference between the direct current busbar positive electrode and the direct current busbar negative electrode, and the negative busbar voltage is an absolute value of a voltage difference between the protective earth wire and the direct current busbar negative electrode; and

the controller is further configured to: when a ratio of the negative busbar voltage to a positive busbar voltage is greater than or equal to a ratio threshold, control the output of the inverter circuit to establish a connection to the power grid, wherein the positive busbar voltage is a difference between the busbar voltage and the negative busbar voltage; or

the controller is further configured to: when a ratio of the negative busbar voltage to the positive busbar voltage is less than a ratio threshold, control the output of the inverter circuit to disconnect from the power grid.

2. The photovoltaic energy storage inverter according to claim 1, wherein
the controller is specifically configured to: when turn-on time of the switching transistor in the boost circuit is greater than or equal to a time threshold, obtain the busbar voltage and the negative busbar voltage.

3. The photovoltaic energy storage inverter according to claim 1 or 2, wherein
the controller is specifically configured to: when a voltage fluctuation between the direct current busbar positive electrode and the direct current busbar negative electrode is less than or equal to a busbar voltage fluctuation threshold, obtain the busbar voltage; and when a voltage fluctuation between the protective earth wire and the direct current busbar negative electrode is less than or equal to a negative busbar voltage fluctuation threshold, obtain the negative busbar voltage.

4. The photovoltaic energy storage inverter according to any one of claims 1 to 3, wherein the photovoltaic energy storage inverter further comprises a third resistor and a first switch that are connected in parallel and disposed between the first resistor and the protective earth wire; and
the controller is further configured to: when controlling the switching transistor in the boost circuit to be in the turned-on state, control the first switch to be in a turned-on state.

5. The photovoltaic energy storage inverter according to claim 4, wherein the photovoltaic energy storage inverter further comprises a fourth resistor and a second switch that are connected in parallel and disposed between the second resistor and the protective earth wire; and

the controller is further configured to: when the output voltage of the photovoltaic array is greater than the voltage threshold, control the second switch to be in a turned-on state, and control the first switch to be in a turned-off state, to obtain a first negative busbar voltage; and

after the first negative busbar voltage is obtained, control the first switch to be in a turned-on state, and control the second switch to be in a turned-off state, to obtain a second negative busbar voltage.

6. A method for controlling a photovoltaic energy storage inverter, applied to the photovoltaic energy storage inverter, wherein the method comprises:

when an output voltage of a photovoltaic array is less than or equal to a voltage threshold, and an energy storage apparatus outputs a voltage to a direct current busbar positive electrode and a direct current busbar negative electrode, controlling a switching transistor in a boost circuit to be in a turned-on state;

obtaining a busbar voltage and a negative busbar voltage, wherein the busbar voltage is an absolute value of a

voltage difference between the direct current busbar positive electrode and the direct current busbar negative electrode, and the negative busbar voltage is an absolute value of a voltage difference between a protective earth wire and the direct current busbar negative electrode; and

when a ratio of the negative busbar voltage to a positive busbar voltage is greater than or equal to a ratio threshold, controlling an output of an inverter circuit to establish a connection to a power grid, wherein the positive busbar voltage is a difference between the busbar voltage and the negative busbar voltage; or

when the ratio of the negative busbar voltage to the positive busbar voltage is less than the ratio threshold, controlling the output of the inverter circuit to disconnect from the power grid, wherein

an input of the boost circuit is configured to connect to the photovoltaic array, an output of the boost circuit is connected to the direct current busbar positive electrode and the direct current busbar negative electrode, a first resistor and a second resistor are connected in series between the direct current busbar positive electrode and the direct current busbar negative electrode, a connection point between the first resistor and the second resistor is configured to connect to the protective earth wire, an input of the inverter circuit is connected to the direct current busbar positive electrode and the direct current busbar negative electrode, and the direct current busbar positive electrode and the direct current busbar negative electrode are further configured to connect to a positive electrode and a negative electrode of the energy storage apparatus.

**7.** The method for controlling photovoltaic energy storage inverter according to claim 6, wherein obtaining the busbar voltage and the negative busbar voltage comprises:
when turn-on time of the switching transistor in the boost circuit is greater than or equal to a time threshold, obtaining the busbar voltage and the negative busbar voltage.

**8.** The method for controlling photovoltaic energy storage inverter according to claim 6 or 7, wherein obtaining the busbar voltage and the negative busbar voltage comprises:
when a voltage fluctuation between the direct current busbar positive electrode and the direct current busbar negative electrode is less than or equal to a busbar voltage fluctuation threshold, obtaining the busbar voltage; and when a voltage fluctuation between the protective earth wire and the direct current busbar negative electrode is less than or equal to a negative busbar voltage fluctuation threshold, obtaining the negative busbar voltage.

**9.** The method for controlling photovoltaic energy storage inverter according to any one of claims 6 to 8, wherein the photovoltaic energy storage inverter further comprises a third resistor and a first switch that are connected in parallel and disposed between the first resistor and the protective earth wire, and the method further comprises:
when controlling the switching transistor in the boost circuit to be in the turned-on state, controlling the first switch to be in a turned-on state.

**10.** The method for controlling photovoltaic energy storage inverter according to claim 9, wherein the photovoltaic energy storage inverter further comprises a fourth resistor and a second switch that are connected in parallel and disposed between the second resistor and the protective earth wire, and the method further comprises:

when the output voltage of the photovoltaic array is greater than the voltage threshold, controlling the second switch to be in a turned-on state, and controlling the first switch to be in a turned-off state, to obtain a first negative busbar voltage; and

after the first negative busbar voltage is obtained, controlling the first switch to be in a turned-on state, and controlling the second switch to be in a turned-off state, to obtain a second negative busbar voltage.

**11.** A photovoltaic power generation system, wherein the photovoltaic power generation system comprises a photovoltaic energy storage inverter and an energy storage apparatus connected to the photovoltaic energy storage inverter, and the photovoltaic energy storage inverter comprises a boost circuit, a first resistor, a second resistor, a direct current busbar positive electrode, a direct current busbar negative electrode, an inverter circuit, and a controller;

an input of the boost circuit is configured to connect to a photovoltaic array, an output of the boost circuit is connected to the direct current busbar positive electrode and the direct current busbar negative electrode, the first resistor and the second resistor are connected in series between the direct current busbar positive electrode and the direct current busbar negative electrode, a connection point between the first resistor and the second resistor is configured to connect to a protective earth wire, an input of the inverter circuit is connected to the direct current busbar positive electrode and the direct current busbar negative electrode, and an output of the inverter circuit is configured to connect to a power grid;

the direct current busbar positive electrode and the direct current busbar negative electrode are further configured

to connect to a positive electrode and a negative electrode of the energy storage apparatus;
the controller is configured to: when an output voltage of the photovoltaic array is less than or equal to a voltage threshold, and the energy storage apparatus outputs a voltage to the direct current busbar positive electrode and the direct current busbar negative electrode, control a switching transistor in the boost circuit to be in a turned-on state;
the controller is further configured to obtain a busbar voltage and a negative busbar voltage, wherein the busbar voltage is an absolute value of a voltage difference between the direct current busbar positive electrode and the direct current busbar negative electrode, and the negative busbar voltage is an absolute value of a voltage difference between the protective earth wire and the direct current busbar negative electrode; and
the controller is further configured to: when a ratio of the negative busbar voltage to a positive busbar voltage is greater than or equal to a ratio threshold, control the output of the inverter circuit to establish a connection to the power grid, wherein the positive busbar voltage is a difference between the busbar voltage and the negative busbar voltage; or
the controller is further configured to: when a ratio of the negative busbar voltage to the positive busbar voltage is less than a ratio threshold, control the output of the inverter circuit to disconnect from the power grid.

**12.** The photovoltaic power generation system according to claim **11,** wherein
the controller is specifically configured to: when turn-on time of the switching transistor in the boost circuit is greater than or equal to a time threshold, obtain the busbar voltage and the negative busbar voltage.

**13.** The photovoltaic power generation system according to claim 11 or 12, wherein
the controller is specifically configured to: when a voltage fluctuation between the direct current busbar positive electrode and the direct current busbar negative electrode is less than or equal to a busbar voltage fluctuation threshold, obtain the busbar voltage; and when a voltage fluctuation between the protective earth wire and the direct current busbar negative electrode is less than or equal to a negative busbar voltage fluctuation threshold, obtain the negative busbar voltage.

**14.** The photovoltaic power generation system according to any one of claims **11** to 13, wherein the photovoltaic energy storage inverter further comprises a third resistor and a first switch that are connected in parallel and disposed between the first resistor and the protective earth wire; and
the controller is further configured to: when controlling the switching transistor in the boost circuit to be in the turned-on state, control the first switch to be in a turned-on state.

**15.** The photovoltaic power generation system according to claim **14,** wherein the photovoltaic energy storage inverter further comprises a fourth resistor and a second switch that are connected in parallel and disposed between the second resistor and the protective earth wire; and

the controller is further configured to: when the output voltage of the photovoltaic array is greater than the voltage threshold, control the second switch to be in a turned-on state, and control the first switch to be in a turned-off state, to obtain a first negative busbar voltage; and
after the first negative busbar voltage is obtained, control the first switch to be in a turned-on state, and control the second switch to be in a turned-off state, to obtain a second negative busbar voltage.

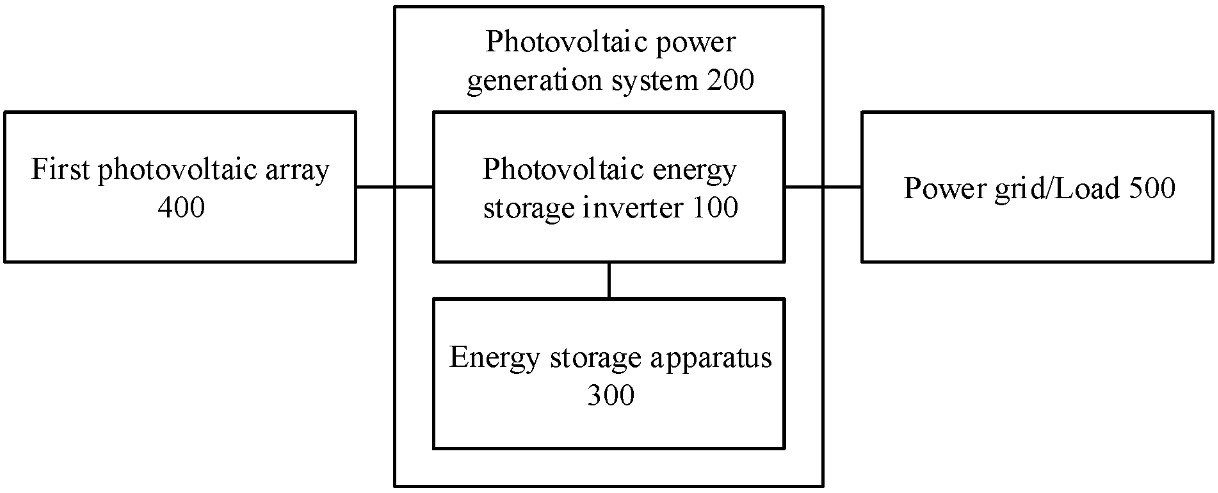
Photovoltaic power generation system 200
First photovoltaic array 400
Photovoltaic energy storage inverter 100
Power grid/Load 500
Energy storage apparatus 300

FIG. 1

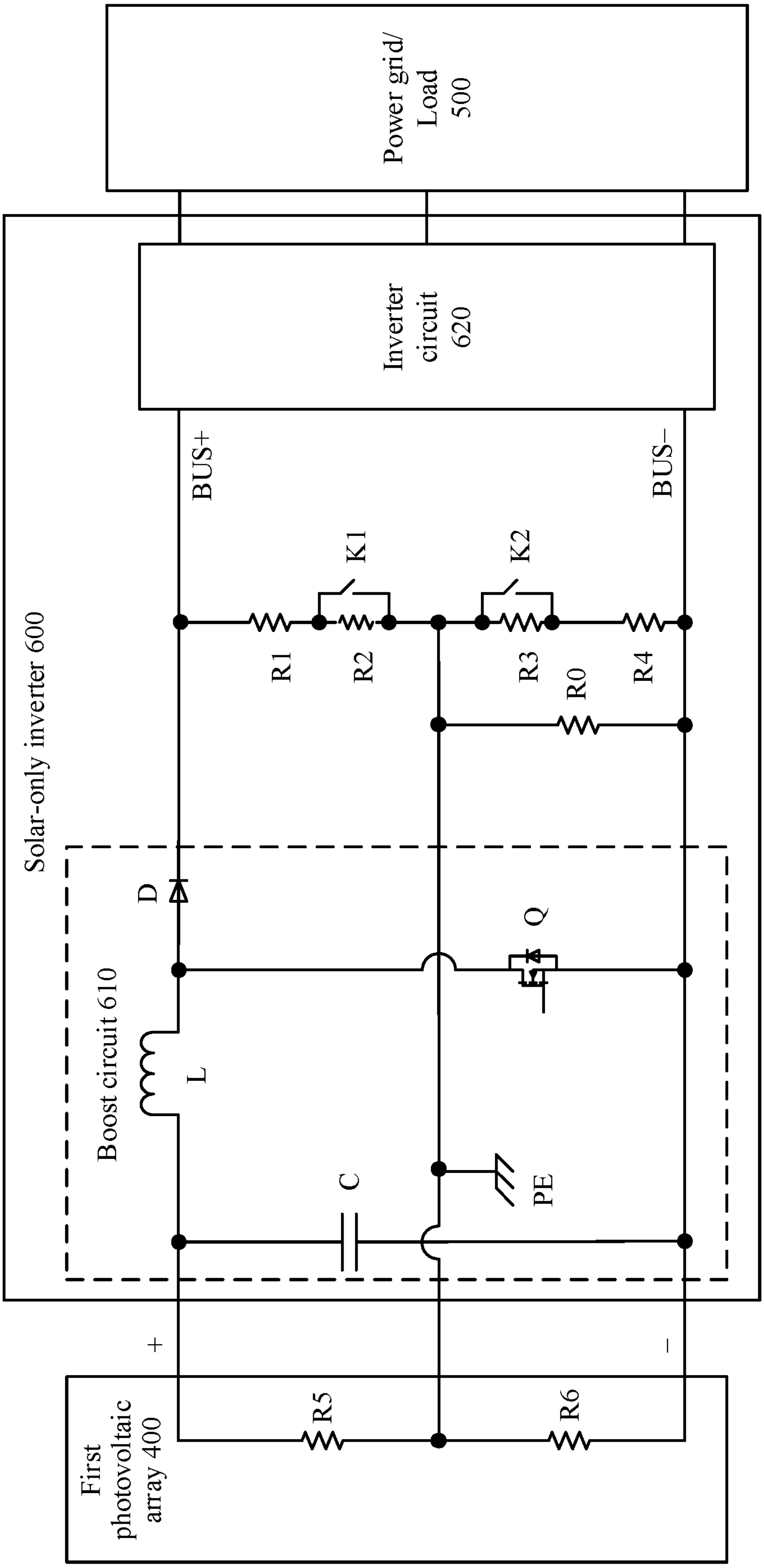
Power grid/
Load
500
Inverter
circuit
620
Solar-only inverter 600
BUS+
BUS–
K1
K2
R1
R2
R3
R0
R4
D
Q
Boost circuit 610
L
C
PE
+
–
R5
R6
First
photovoltaic
array 400

FIG. 2

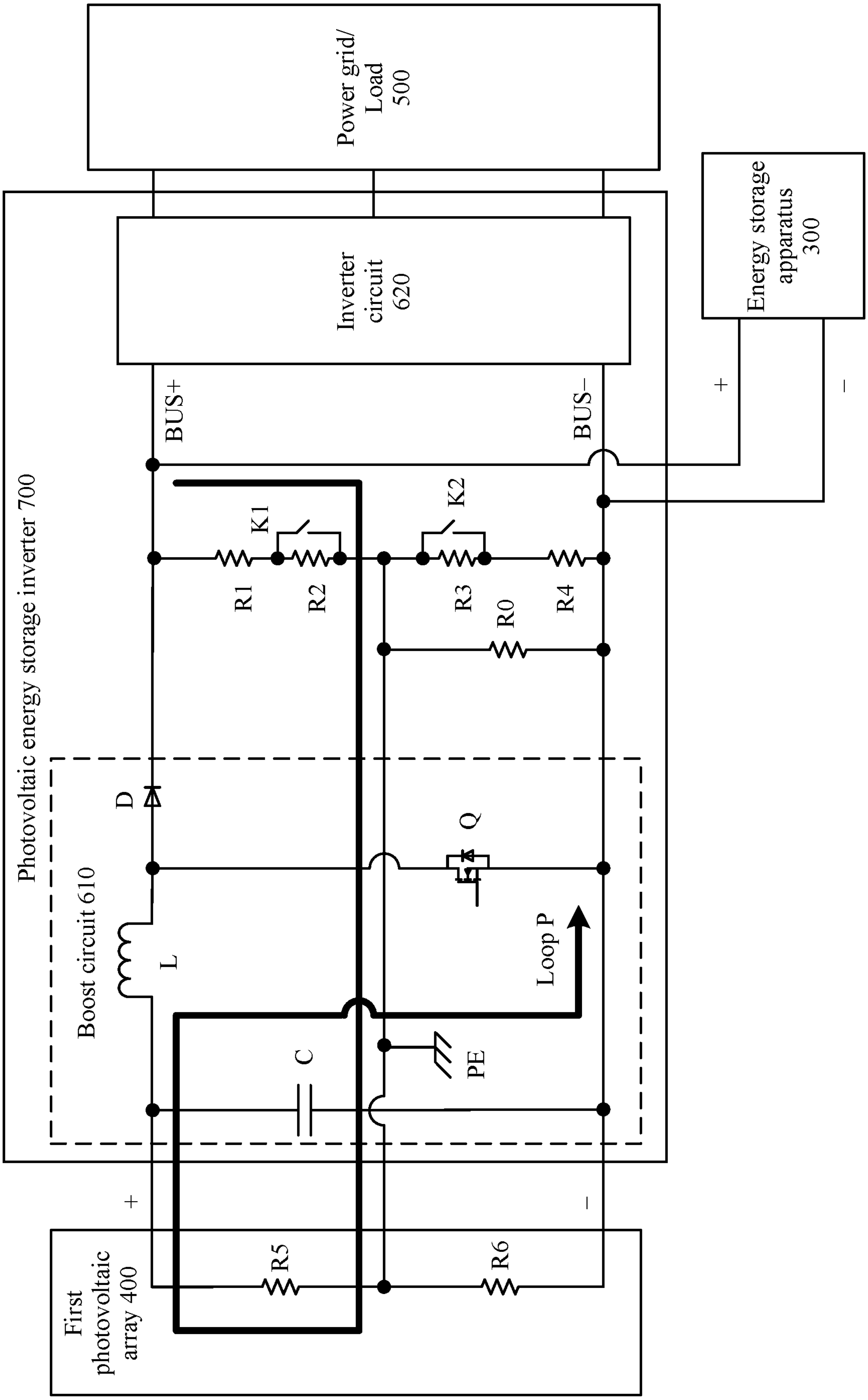
Power grid/
Load
500
Inverter
circuit
620
Energy storage
apparatus
300
Photovoltaic energy storage inverter 700
BUS+
BUS−
+
−
K1
K2
R1
R2
R3
R0
R4
D
Q
Boost circuit 610
L
Loop P
C
PE
+
−
R5
R6
First
photovoltaic
array 400

FIG. 3

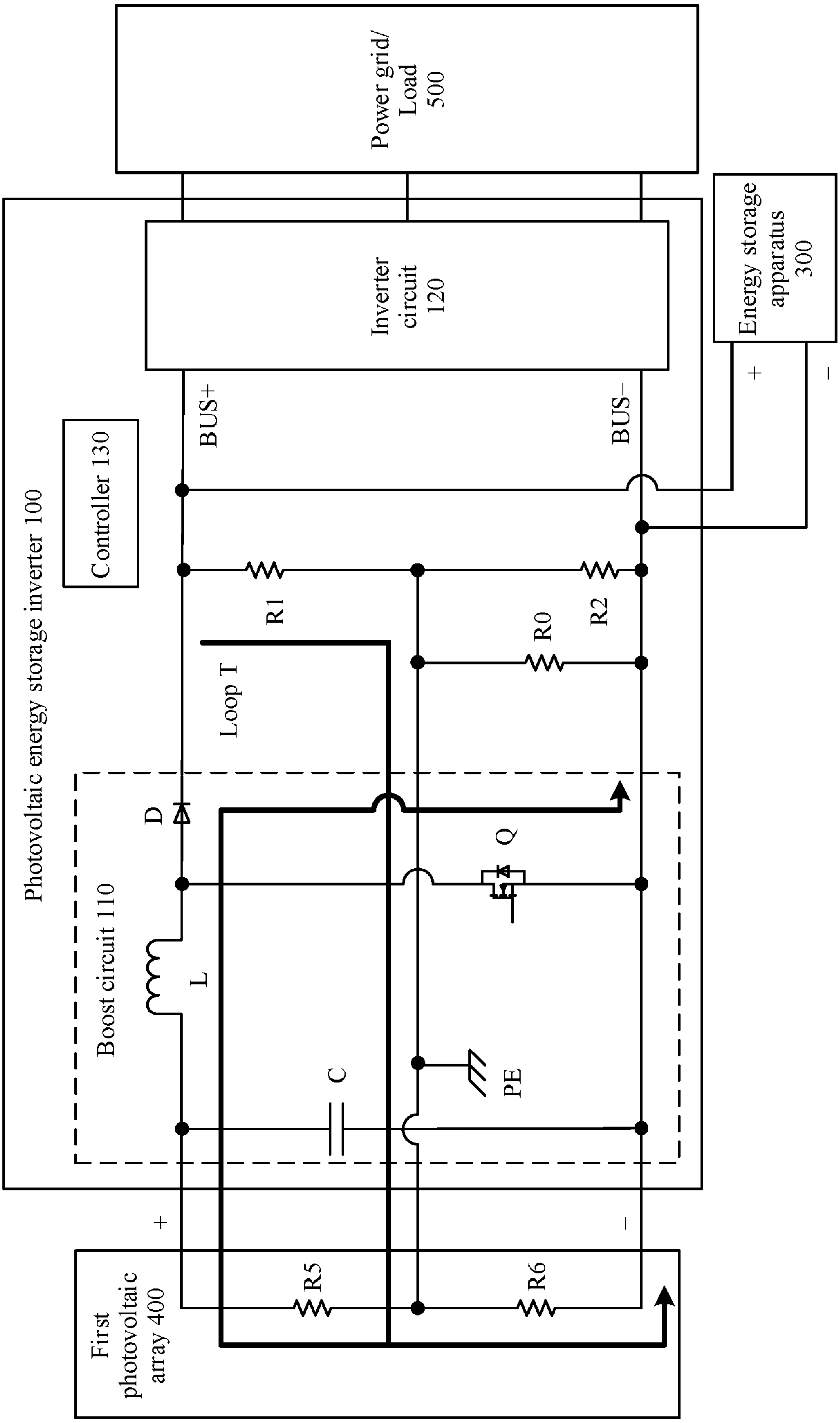
Power grid/ Load 500
Photovoltaic energy storage inverter 100
Inverter circuit 120
Energy storage apparatus 300
+
−
Controller 130
BUS+
BUS−
R1
R0
R2
Loop T
D
Q
Boost circuit 110
L
C
PE
+
−
First photovoltaic array 400
R5
R6

FIG. 4

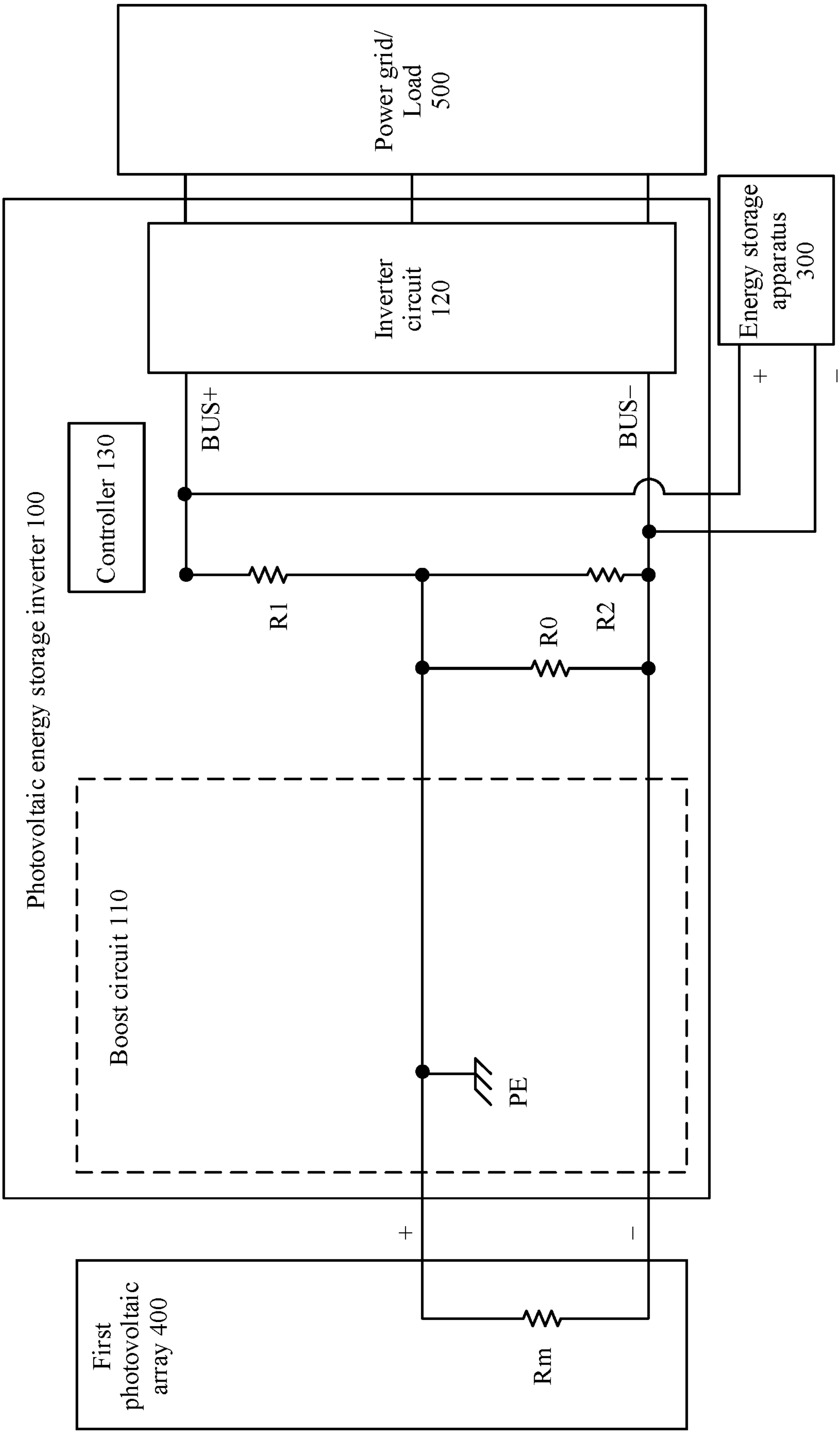
Power grid/
Load
500
Photovoltaic energy storage inverter 100
Inverter
circuit
120
Energy storage
apparatus
300
+
−
Controller 130
BUS+
BUS−
R1
R0
R2
Boost circuit 110
PE
+
−
First
photovoltaic
array 400
Rm

FIG. 5

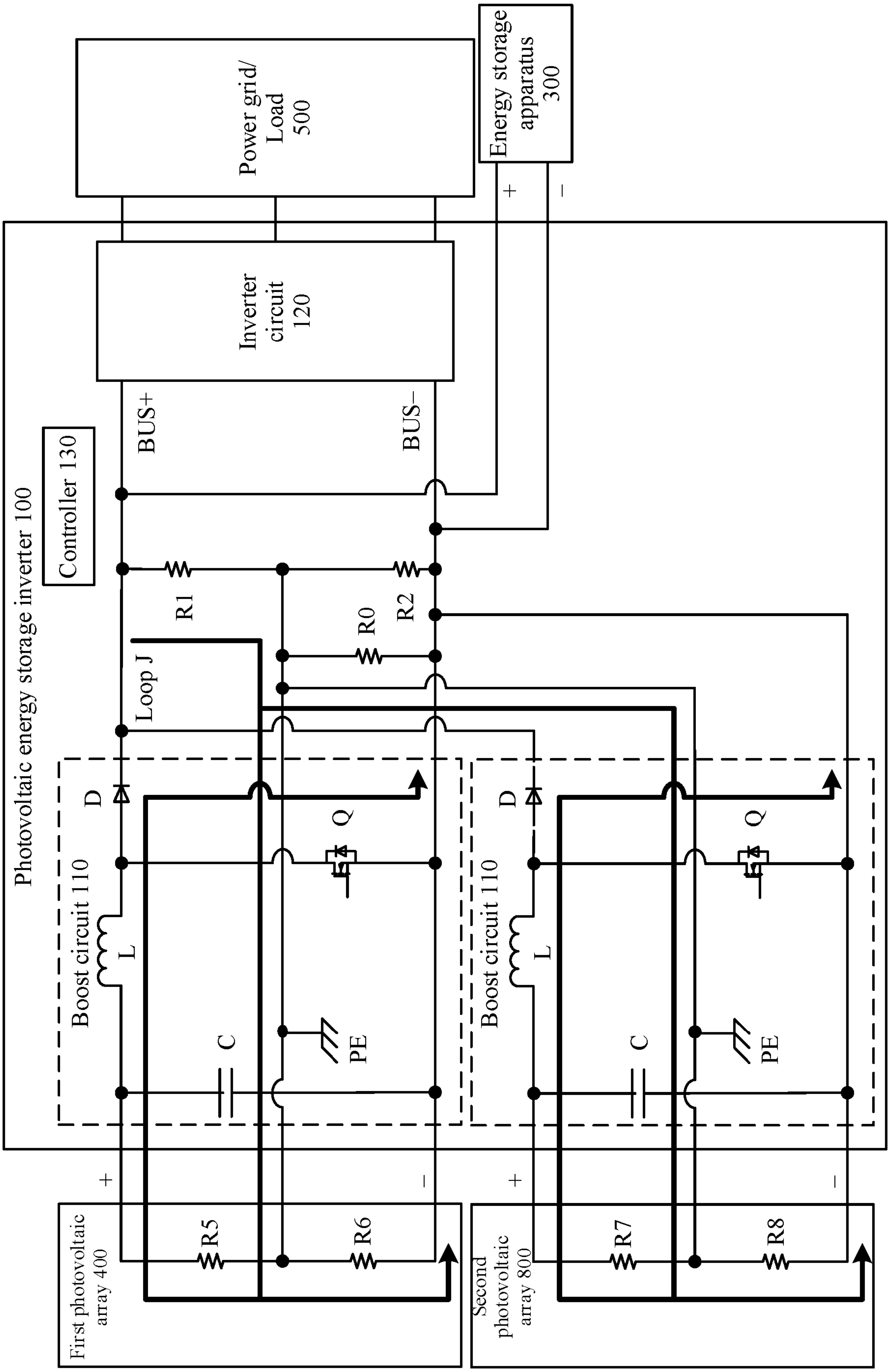
Power grid/
Load
500
Energy storage
apparatus
300
+
–
Inverter
circuit
120
Photovoltaic energy storage inverter 100
Controller 130
BUS+
BUS–
R1
R0
R2
Loop J
Boost circuit 110
D
Q
L
C
PE
Boost circuit 110
D
Q
L
C
PE
+
–
+
–
First photovoltaic
array 400
R5
R6
Second
photovoltaic
array 800
R7
R8

FIG. 6(a)

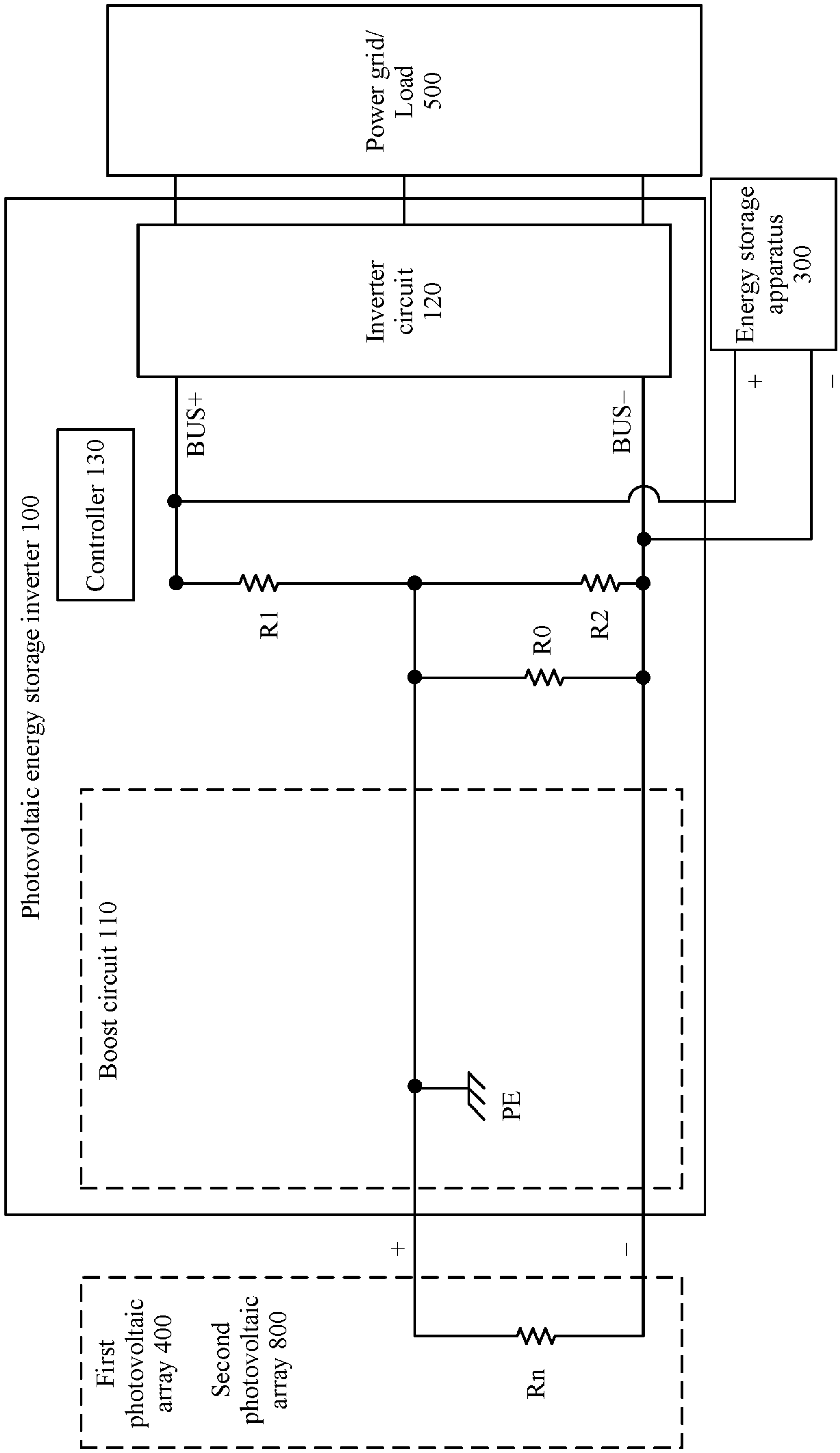
Power grid/
Load
500
Photovoltaic energy storage inverter 100
Controller 130
Inverter
circuit
120
Energy storage
apparatus
300
+
−
BUS+
BUS−
R1
R0
R2
Boost circuit 110
PE
+
−
First
photovoltaic
array 400
Second
photovoltaic
array 800
Rn

FIG. 6(b)

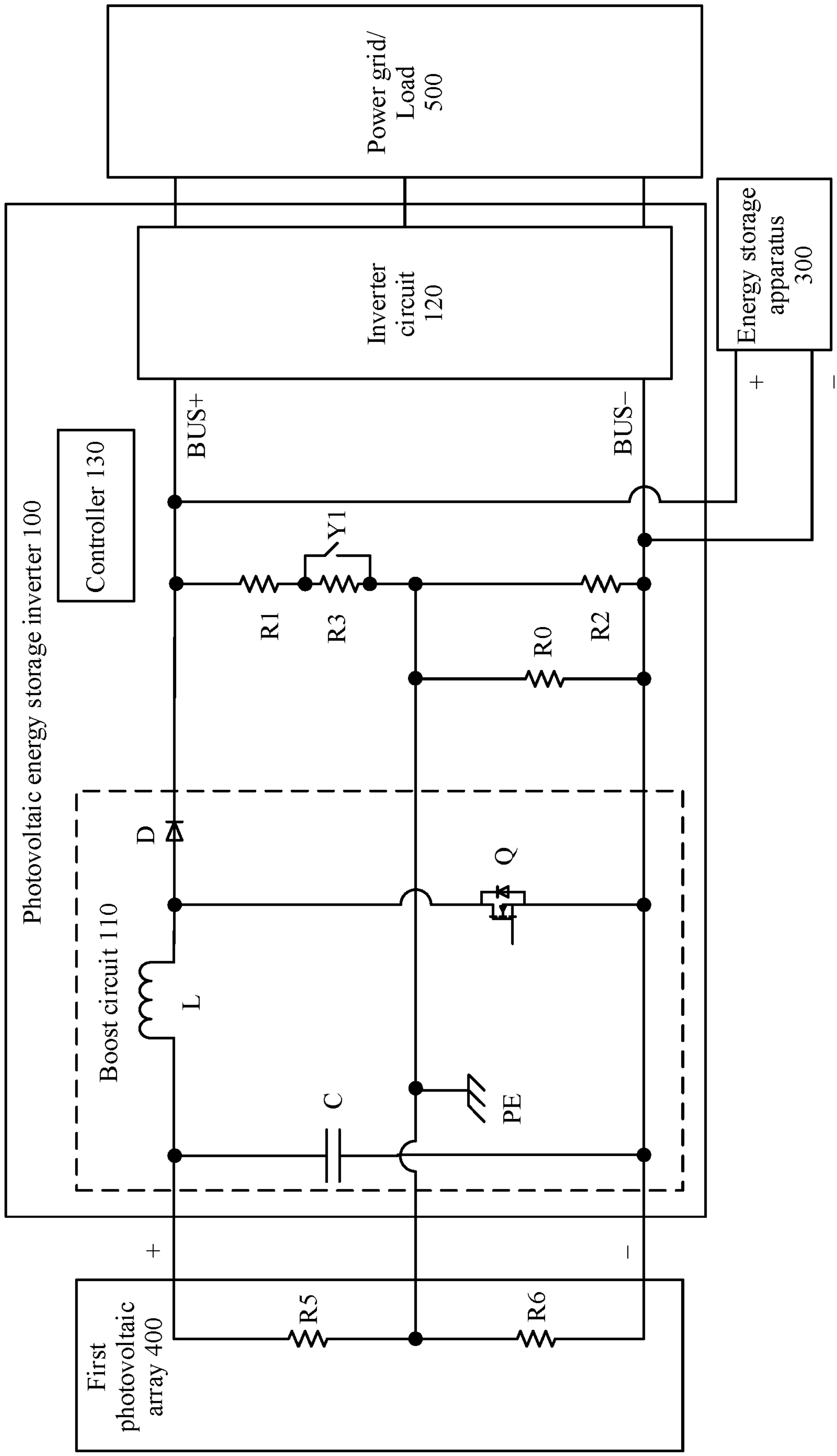
Power grid/
Load
500
Inverter
circuit
120
Energy storage
apparatus
300
+
–
Photovoltaic energy storage inverter 100
Controller 130
BUS+
BUS–
Y1
R1
R3
R0
R2
Boost circuit 110
D
Q
L
C
PE
+
–
First
photovoltaic
array 400
R5
R6

FIG. 7

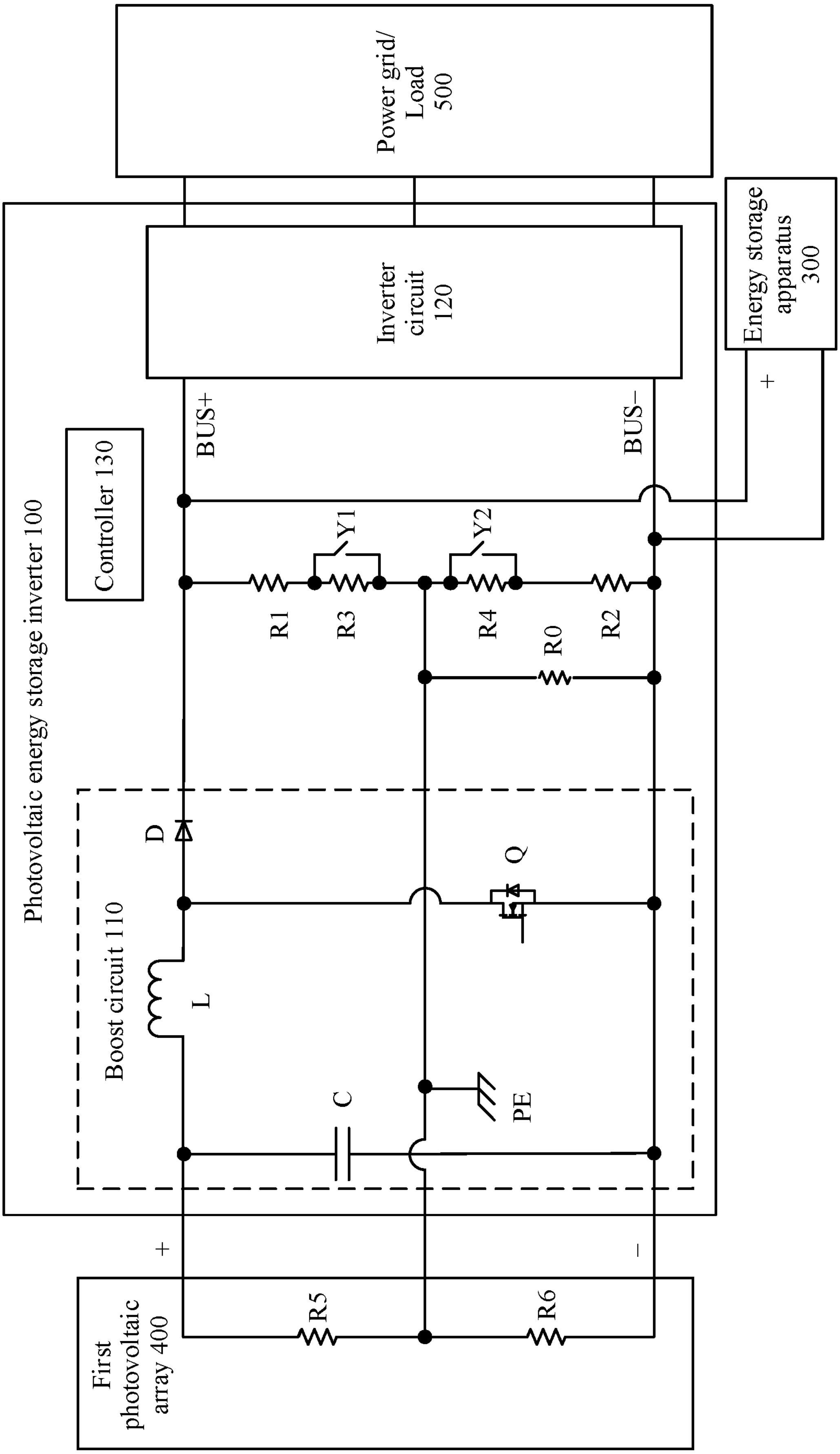
Power grid/
Load
500
Photovoltaic energy storage inverter 100
Inverter
circuit
120
Energy storage
apparatus
300
+
−
Controller 130
BUS+
BUS−
Y1
Y2
R1
R3
R4
R0
R2
D
Q
Boost circuit 110
L
C
PE
+
−
First
photovoltaic
array 400
R5
R6

FIG. 8

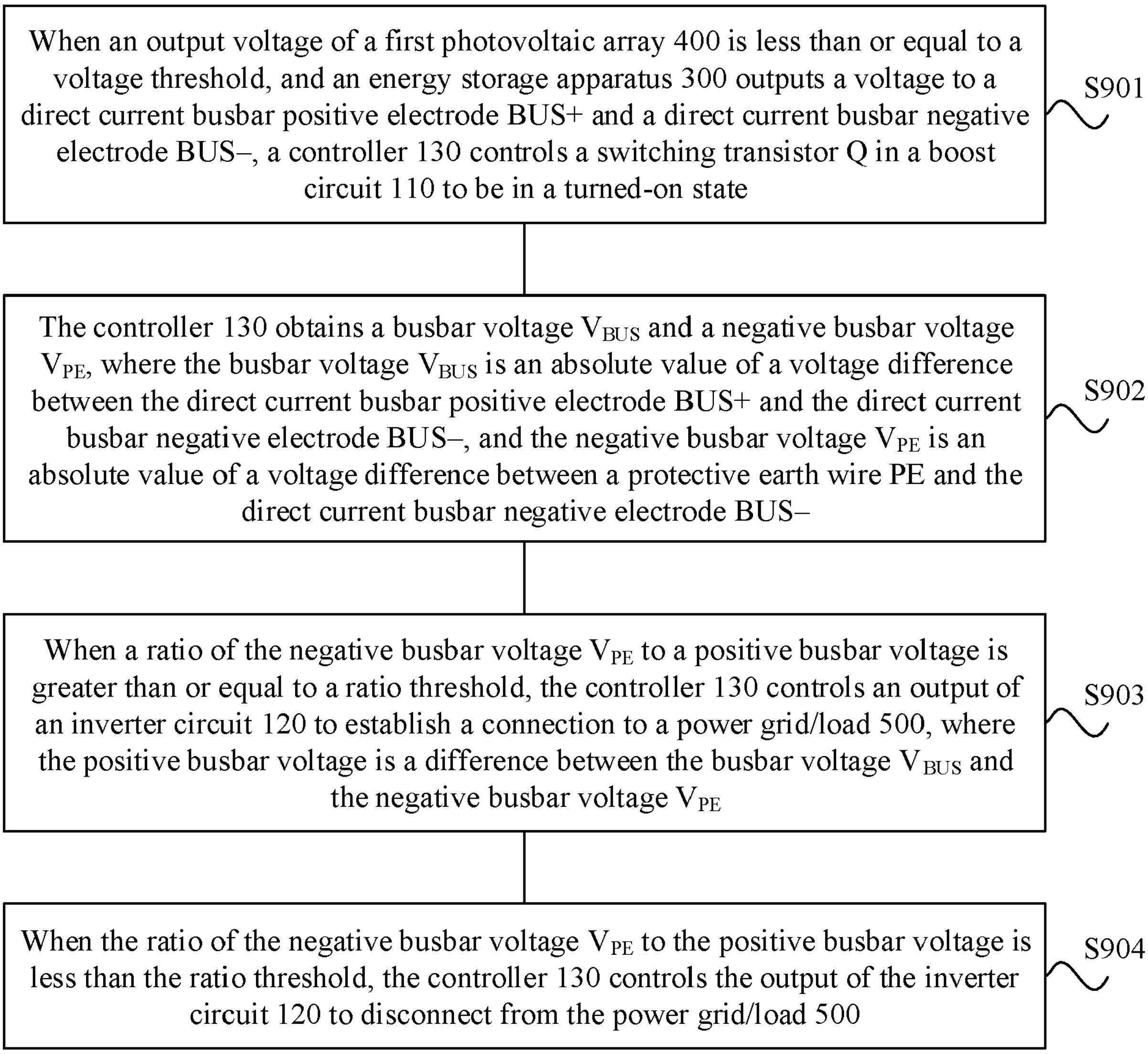
When an output voltage of a first photovoltaic array 400 is less than or equal to a voltage threshold, and an energy storage apparatus 300 outputs a voltage to a direct current busbar positive electrode BUS+ and a direct current busbar negative electrode BUS–, a controller 130 controls a switching transistor Q in a boost circuit 110 to be in a turned-on state
S901
The controller 130 obtains a busbar voltage $V_{BUS}$ and a negative busbar voltage $V_{PE}$, where the busbar voltage $V_{BUS}$ is an absolute value of a voltage difference between the direct current busbar positive electrode BUS+ and the direct current busbar negative electrode BUS–, and the negative busbar voltage $V_{PE}$ is an absolute value of a voltage difference between a protective earth wire PE and the direct current busbar negative electrode BUS–
S902
When a ratio of the negative busbar voltage $V_{PE}$ to a positive busbar voltage is greater than or equal to a ratio threshold, the controller 130 controls an output of an inverter circuit 120 to establish a connection to a power grid/load 500, where the positive busbar voltage is a difference between the busbar voltage $V_{BUS}$ and the negative busbar voltage $V_{PE}$
S903
When the ratio of the negative busbar voltage $V_{PE}$ to the positive busbar voltage is less than the ratio threshold, the controller 130 controls the output of the inverter circuit 120 to disconnect from the power grid/load 500
S904

FIG. 9

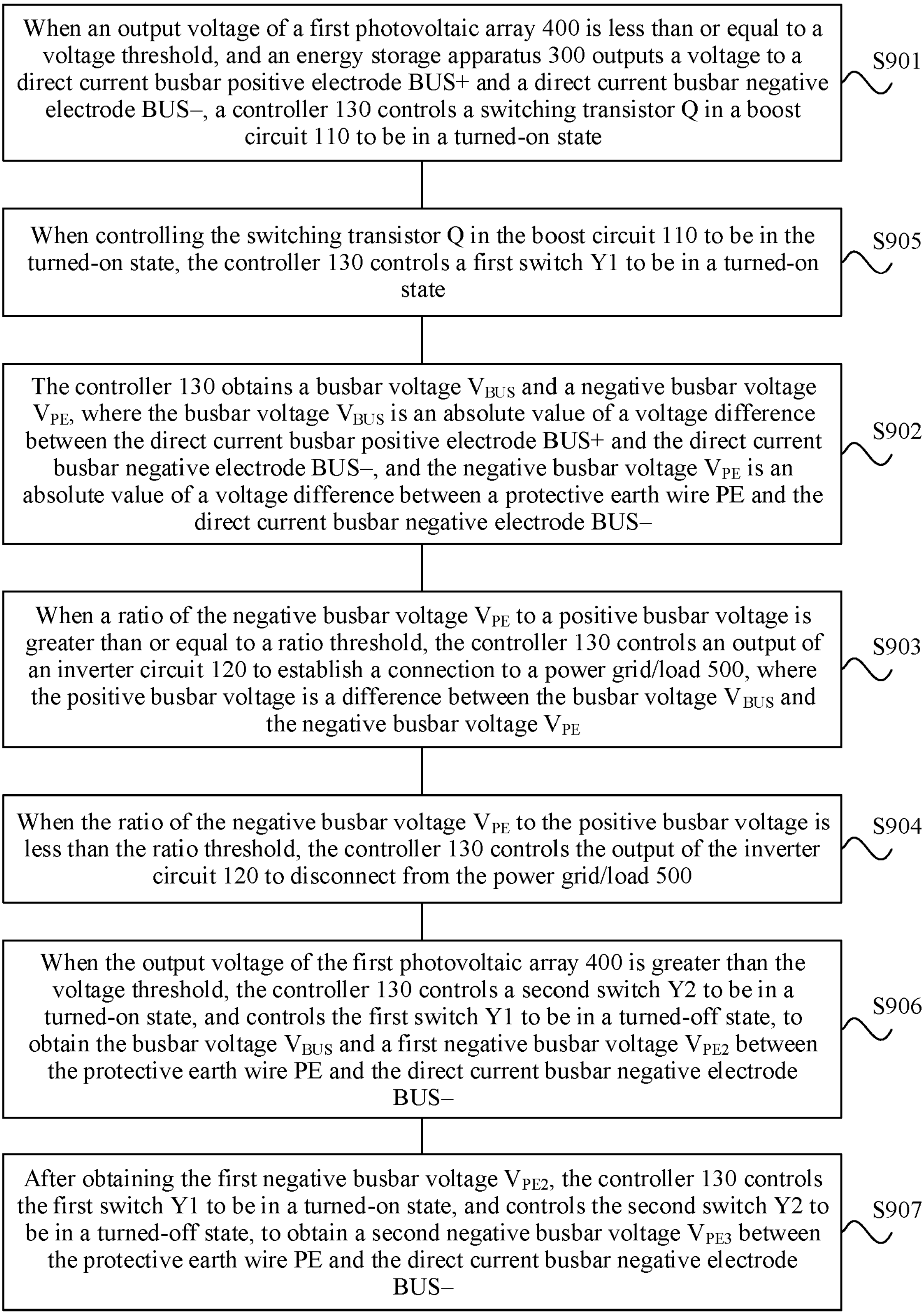
When an output voltage of a first photovoltaic array 400 is less than or equal to a voltage threshold, and an energy storage apparatus 300 outputs a voltage to a direct current busbar positive electrode BUS+ and a direct current busbar negative electrode BUS–, a controller 130 controls a switching transistor Q in a boost circuit 110 to be in a turned-on state
S901
When controlling the switching transistor Q in the boost circuit 110 to be in the turned-on state, the controller 130 controls a first switch Y1 to be in a turned-on state
S905
The controller 130 obtains a busbar voltage $V_{BUS}$ and a negative busbar voltage $V_{PE}$, where the busbar voltage $V_{BUS}$ is an absolute value of a voltage difference between the direct current busbar positive electrode BUS+ and the direct current busbar negative electrode BUS–, and the negative busbar voltage $V_{PE}$ is an absolute value of a voltage difference between a protective earth wire PE and the direct current busbar negative electrode BUS–
S902
When a ratio of the negative busbar voltage $V_{PE}$ to a positive busbar voltage is greater than or equal to a ratio threshold, the controller 130 controls an output of an inverter circuit 120 to establish a connection to a power grid/load 500, where the positive busbar voltage is a difference between the busbar voltage $V_{BUS}$ and the negative busbar voltage $V_{PE}$
S903
When the ratio of the negative busbar voltage $V_{PE}$ to the positive busbar voltage is less than the ratio threshold, the controller 130 controls the output of the inverter circuit 120 to disconnect from the power grid/load 500
S904
When the output voltage of the first photovoltaic array 400 is greater than the voltage threshold, the controller 130 controls a second switch Y2 to be in a turned-on state, and controls the first switch Y1 to be in a turned-off state, to obtain the busbar voltage $V_{BUS}$ and a first negative busbar voltage $V_{PE2}$ between the protective earth wire PE and the direct current busbar negative electrode BUS–
S906
After obtaining the first negative busbar voltage $V_{PE2}$, the controller 130 controls the first switch Y1 to be in a turned-on state, and controls the second switch Y2 to be in a turned-off state, to obtain a second negative busbar voltage $V_{PE3}$ between the protective earth wire PE and the direct current busbar negative electrode BUS–
S907

FIG. 10

Europäisches Patentamt
European Patent Office
Office européen des brevets

# EUROPEAN SEARCH REPORT

Application Number
EP 25 19 5994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 019 242 A (HANGZHOU HOYMILES ELECTRIC POWER AND ELECTRIC CO LTD) 8 February 2022 (2022-02-08) * figure 2 * ----- | 1-15 | INV. H02J3/32 H02J3/38 H02J7/35 H02M1/36 H02M7/48 |
| A | US 2022/029582 A1 (WANG XINYU [CN] ET AL) 27 January 2022 (2022-01-27) * figures 4,5 * ----- | 1-15 | |
| A | US 10 411 479 B2 (DELTA ELECTRONICS SHANGHAI CO [CN]) 10 September 2019 (2019-09-10) * figure 4 * ----- | 1-15 | |

TECHNICAL FIELDS SEARCHED (IPC)
H02J
H02M

The present search report has been drawn up for all claims

| Place of search | Date of completion of the search | Examiner |
|---|---|---|
| Munich | 5 December 2025 | Ramcke, Ties |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 19 5994

This annex lists the patent family members relating to the patent documents cited in the above-mentioned European search report. The members are as contained in the European Patent Office EDP file on
The European Patent Office is in no way liable for these particulars which are merely given for the purpose of information.

05-12-2025

| Patent document cited in search report | Publication date | Patent family member(s) | Publication date |
|---|---|---|---|
| CN 114019242 A | 08-02-2022 | CN 114019242 A | 08-02-2022 |
| | | EP 4435440 A1 | 25-09-2024 |
| | | US 2025027978 A1 | 23-01-2025 |
| | | WO 2023131127 A1 | 13-07-2023 |
| US 2022029582 A1 | 27-01-2022 | AU 2021206847 A1 | 10-02-2022 |
| | | CN 111725981 A | 29-09-2020 |
| | | EP 3944451 A1 | 26-01-2022 |
| | | US 2022029582 A1 | 27-01-2022 |
| US 10411479 B2 | 10-09-2019 | CN 107305224 A | 31-10-2017 |
| | | US 2017302082 A1 | 19-10-2017 |

EPO FORM P0459

For more details about this annex : see Official Journal of the European Patent Office, No. 12/82